# EUROPEAN PATENT APPLICATION

(11) **EP 2 009 641 A1**
(43) Date of publication of application: **31.12.2008**
(21) Application number: 08004033.0
(22) Date of filing: 04.03.2008
(51) Int. Cl.: G11B 27/10, H04N 5/76, H04N 5/445

(54) **Recording apparatus, recording/reproducing system, and recording method**

(30) Priority: 29.06.2007 JP 2007173421
(71) Applicant: Kabushiki Kaisha Toshiba, Minato-ku, Tokyo 105-8001 (JP)
(72) Inventor: Moteki, Masataka, Tokyo 105-8001 (JP)
(74) Representative: HOFFMANN EITLE

(57) **Abstract**

Hard disk recorder combining temporary loop recording for time shift mode with linear, normal, permanent recording. Temporary loop buffer cyclically overwritten and managed in entities of recorded broadcast programs which are detected from EPG related received data. Use of upper limit value for number of programs buffered concurrently (rather than total storage amount). When exceeding limit, oldest recording is overwritten by newly recorded program. Loop recorded programs are included in standard receiver EPG and reach back in time as far as buffered programs in loop are available. Through combined EPG option for user to select program to transfer from temporary loop area to permanent, linear recording area. After transfer either reset of loop buffer (with loss of all other old programs) or transfer recording to second loop buffer (joint buffer management during transition).

## Description

### CROSS-REFERENCE TO RELATED APPLICATIONS

This application is based upon and claims the benefit of priority from the prior Japanese Patent Application No. 2007-173421, filed on June 29, 2007; the entire contents of which are incorporated herein by reference.

### BACKGROUND OF THE INVENTION

### 1. FIELD OF THE INVENTION

The present invention relates to a recording apparatus recording data such as, for example, a hard disk video recorder, and to a recording/reproducing system and a recording method.

### 2. DESCRIPTION OF THE RELATED ART

A video recorder recording television programs and so on can perform so-called timer recording based on pre-registered start time and end time of a program to be recorded. Here, there has been disclosed an art realizing reliable recording of a whole series of programs broadcast over a plurality of number of times, by reserving a memory area whose size is equal to a capacity necessary for recording one broadcast program multiplied by the number of times the series of the programs is broadcast (see JP-A 2006-332865).

In a field of a video recorder and the like utilizing a mass storage medium such as a hard disk, a recording method called loop recording is under development. The loop recording is a recording mode to reserve a fixed area separately from a normal recording area and repeat overwrite-recording to the fixed area independently of normal recording. With the use of the loop recording, a user can have a currently watched program temporarily stored when leaving in the middle of the program, and can later resume watching the program from a scene where the user stopped watching when he/she left.

### BRIEF SUMMARY OF THE INVENTION

Generally, recording is controlled in the loop recording based on the time length. Specifically, the loop time for loop recording is set and a recorded portion corresponding to the surplus time length over this loop time is deleted. That is, the recorded portion is deleted irrespective of recorded contents. As a result, the whole contents of a program are not sometimes left on the loop recording. For example, in some case, a first half of a recorded program is deleted and only a latter half of the program is left.

The present invention was made to solve such a problem, and its object is to provide a recording apparatus, a recording/reproducing system, and a recording method capable of preventing incomplete recording of contents when the contents are loop-recorded.

To achieve the above obj ect, a recording apparatus according to an aspect of the present invention includes: a first area generating unit generating, in a storage medium, a first recording area to which first stream data is recorded; a second area generating unit generating, in the storage medium, a second recording area to which second stream data different from the first stream data is repeatedly overwrite-recorded; a management information recording unit recording, to the storage medium, management information managing the first and second recording areas; a data recording unit recording the second stream data to the second recording area; a management information managing unit updating the management information when the second stream data is recorded, to set a partial area which is a segment of the second recording area and to prevent the number of the partial areas from exceeding a predetermined value; and an area transfer unit transferring, to the first recording area, the second stream data recorded in the second recording area.

A recording method according to anther aspect of the present inventionincludes: generating, ina storagemedium, afirstrecording area to which first stream data is recorded; generating, in the storage medium, a second recording area to which second stream data different from the first stream data is repeatedly overwrite-recorded; recording, to the storage medium, management information managing the first and second recording areas; recording the second stream data to the second recording area; and updating the management information when the second stream data is recorded, to set a partial area which is a segment of the second recording area and to prevent the number of the partial areas from exceeding a predetermined value.

### BRIEF DESCRIPTION OF THE DRAWINGS

FIG. 1 is a block diagram showing the configuration of a recording apparatus of a first embodiment according to the present invention.

FIG. 2 is a schematic chart showing an overview of data structure in the recording apparatus of the first embodiment.

FIG. 3 is a block diagram showing the configuration of a record management information controller shown in FIG. 1.

FIG. 4 is a flowchart showing a loop recording operation in the recording apparatus according to the first embodiment.

FIG. 5 is a schematic chart showing a recording operation of normal recording in the first embodiment.

FIG. 6 is a schematic chart showing a recording operation of loop recording in the first embodiment.

FIG. 7 is a schematic chart showing a recording operation of the loop recording in the first embodiment.

FIG. 8 is a schematic chart showing a recording operation of the loop recording in the first embodiment.

FIG. 9 is a schematic chart showing a recording operation of the loop recording in the first embodiment.

FIG. 10 is a schematic chart showing a recording operation of the loop recording in the first embodiment.

FIG. 11 is a schematic chart showing a recording operation of the loop recording in the first embodiment.

FIG. 12 is a view showing an example of a display screen of a display unit.

FIG. 13 is a view showing an example of a display screen of the display unit.

FIG. 14 is a view showing an example of a display screen of the display unit.

FIG. 15 is a view showing an example of a display screen of the display unit.

FIG. 16 is a view showing an example of a display screen of the display unit.

FIG. 17 is a view showing an example of a display screen of a display unit.

FIG. 18 is a flowchart showing a loop recording operation in a recording apparatus of a second embodiment according to the present invention.

FIG. 19 is a schematic chart showing a recording operation of loop recording in the second embodiment.

FIG. 20 is a schematic chart showing a recording operation of the loop recording in the second embodiment.

FIG. 21 is a schematic chart showing a recording operation of the loop recording in the second embodiment.

FIG. 22 is a schematic chart showing a recording operation of the loop recording in the second embodiment.

FIG. 23 is a schematic chart showing a recording operation of the loop recording in the second embodiment.

FIG. 24 is a schematic chart showing a recording operation of the loop recording in the second embodiment.

FIG. 25 is a schematic chart showing a recording operation of the loop recording in the second embodiment.

FIG. 26 is a schematic chart showing a recording operation of the loop recording in the second embodiment.

FIG. 27 is a schematic chart showing recording areas in a modified example of the first embodiment.

FIG. 28 is a schematic chart showing recording areas in a modified example of the second embodiment.

### DETAILED DESCRIPTION OF THE INVENTION

With a video recorder (recording apparatus), a television set, and the like having a so-called loop recording function, a user can perform a loop recording activation operation when the user temporarily stops watching a television program, for example, because he/she leaves, and when resuming watching the television program later, the user can reproduce the program from a position where he/she stopped watching, by performing an activation operation of a "chasing playback operation".

In embodiments of the present invention described below, loop recording based on video contents (especially, the number of programs) is achieved, thereby realizing the saving of desired video contents (especially, the program) in its entirety.

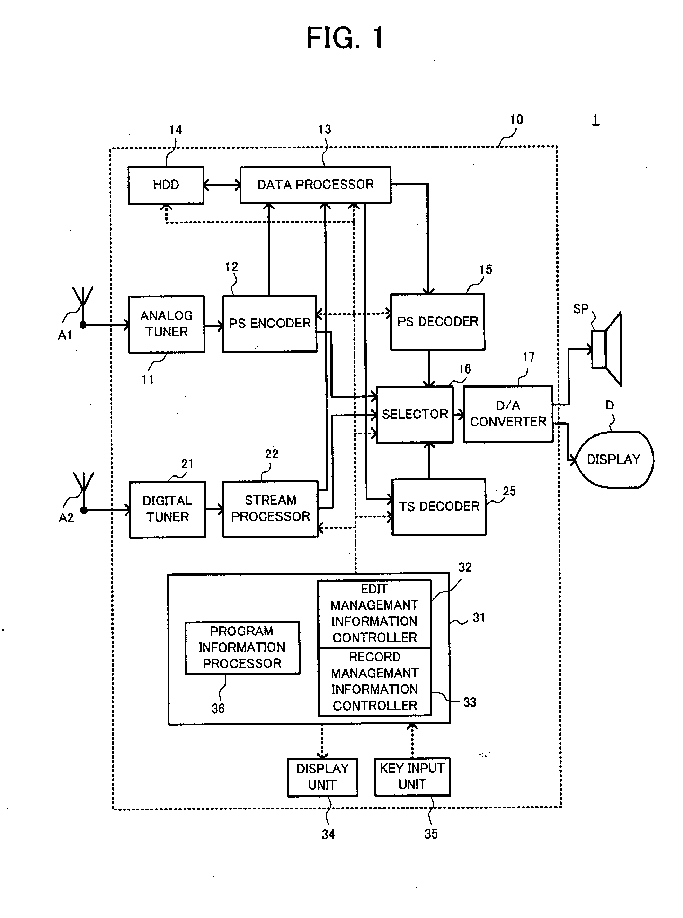

Hereinafter, the embodiments of the present invention will be described in detail with reference to the drawings. FIG. 1 is a block diagram showing the configuration of a recording apparatus of a first embodiment according to the present invention.

As shown in FIG. 1, a recording apparatus 10 of this embodiment constitutes a television system 1 together with a speaker SP, a display D, an analog antenna A1 receiving analog broadcasts, and a digital antenna A2 receiving terrestrial, BS, and CS digital broadcasts.

The recording apparatus 10 of this embodiment includes an analog tuner 11, a PS encoder 12, a data processor 13, a HDD 14, a PS decoder 15, a selector 16, a D/A converter 17, a digital tuner 21, a stream processor 22, a TS decoder 25,an arithmetic unit (CPU) 31 including an edit management information controller 32, a record management information controller 33, and a program information processor 36, a display unit 34, and a key input unit 35.

The analog tuner 11 receives, via the analog antenna A1, analog broadcast waves of terrestrial broadcasting, BS broadcasting, and the like. The analog tuner 11 tunes to a specific broadcast wave and demodulates it based on a predetermined broadcast standard such as NTSC to convert the broadcast wave into an analog video signal and an analog audio signal and inputs the video and audio signals to the PS encoder 12. The analog tuner 11 also has a function of obtaining program information (information used for screen display of EPG: ElectronicProgramGuide) superimposed on the analog broadcast wave.

The PS encoder 12 includes an A/D converter converting the inputted analog video and audio signals into digital signals, a video encoder, and an audio encoder. The PS encoder 12 may further include a sub-picture encoder. The PS encoder 12 converts the digitized video signal into a compressed digital video signal with a variable bit rate complying with the MPEG2 or MPEG1 standard. The PS encoder 12 also converts the digitized audio signal into a compressed digital audio signal with a fixed bit rate complying with the MPEG or AC-3 standard or into a digital audio signal of linear PCM. Upon receipt of the analog video signal and the analog audio signal from the analog tuner 11, the PS encoder 12 performs predetermined encodingprocessing. Specifically, after converting the video signal and the audio signal into digital signals, the PS encoder 12 encodes the digital video and audio signals and thereafter packs these signals, thereby converting the encoded signals into a video pack, an audio pack, and a sub-picture pack. Then, the PS encoder 12 combines these packs and converts them into a format suitable for recording into the HDD 14. The signals converted by the PS encoder 12 are sent to the data processor 13. Incidentally, the PS encoder 12 may send the digital video and audio signals resulting from the A/D conversion, directly to the selector 16 without encoding them.

The data processor 13 is a data controller receiving the digital video and audio signals encoded by the PS encoder 12 and writing the received digital video and audio signals to the HDD 14 on a subsequent stage. Specifically, the data processor 13 receives data on a per GOP basis from a formatter included in the PS encoder 12 in a case of recording of contents of an analog broadcast, and from the stream processor 22 in a case of recording of contents of a digital broadcast, and records the received data to the HDD 14. The data processor 13 also has a function of reading predetermined reproduced signals from the HDD 14. The data processor 13 includes abuffercircuit, amodulator/demodulatorcircuit, an error corrector circuit, and so on, and data processing for recording and data processing for reproduction by the data processor 13 are executed independently of each other.

The HDD 14 is a recorder recording/reproducing data by driving a storage medium such as, for example, a hard disk. The HDD 14 is not limited to the hard disk but may be any capable of recording/reproducing digital data.

The PS decoder 15 includes: a separator separating and extracting packs such as video packs and audio packs from multiplexed signals recorded in a packed structure in the HDD 14; a memory used when signal processing such as the pack separation and other processing are executed; a video decoder decoding main video data (contents of the video packs) separated by the separator; a sub-picture decoder decoding sub-picture data (contents of sub-picture packs) separated by the separator; and an audio decoder decoding audio data (contents of the audio packs) separated by the separator. The PS decoder 15 may include a video processor which appropriately combines the decoded sub-picture with the decoded main video, and outputs the resultant with a menu, a highlight button, a sub title, and other sub-picture superimposed on the main video. The PS decoder 15 basically decodes A/D-converted video and audio signals of an analog broadcast wave which are recorded in the HDD 14.

The selector 16 is a signal switcher for selecting signals out of output signals from the PS decoder 15, output signals from the TS decoder 25, output signals from the PS encoder 12, and output signals from the stream processor 22, and outputting the selected output signals to the D/A converter 17. That is, the selector 16 selects analog broadcast wave signals recorded in the HDD 14, digital broadcast wave signals recorded in the HDD 14, analog broadcast wave signals digitized by the PS encoder 12, or digital broadcast wave signals from the streamprocessor 22. The selector 16 selects signals based on a select signal from the CPU 31.

The D/A converter 17 converts a digital video signal and a digital audio signal selected by the selector 16 into an analog video signal and an analog audio signal respectively. The D/A converter 17 outputs the analog video signal and the analog audio signal resulting from the D/A conversion to the display D and the speaker SP respectively.

The digital tuner 21 corresponds to the analog tuner 11 and receives digital broadcast waves of terrestrial broadcasting, BS broadcasting, CS broadcasting, and the like via the digital antenna A2. The digital tuner 21 extracts TS packets, such as video packets and audio packets of a program selected by a user, from MPEG2-TS signals to input the extracted TS packets to the stream processor 22. The digital tuner 21 has a function of extracting program information used for the aforesaid EPG, which is packetized with the digital broadcast wave.

The stream processor 22 is a data converter performing conversion processing such as processing of the video data, the audio data, data of the program information, and so on, which are small divided TS packets extracted by the digital tuner 21, into large-sized packets suitable for recording to the HDD 14. Data resulting from the conversion are recorded to the HDD 14 via the data processor 13.

The TS decoder 2 5 corresponds to the PS decoder 15 and decodes recorded signals of a digital broadcast wave which are read from the HDD 14 via the data processor 13. The TS decoder 25 includes: a separator separating and extracting video data, audio data, and so on from recorded multiplexed signals; a video decoder decoding the separated video data; and an audio decoder decoding the separated audio data. The TS decoder 25 inputs the decoded digital video and audio signals to the selector 16.

According to a control program, the CPU 31 executes processing such as defective location detection, unrecorded area detection, setting of record information recording position, UDF recording, and AV address setting. The CPU 31 has an information processor necessary for controlling the entire system, and includes a work RAM, a video management information creator, a copy-related information detector, a copy and scrambling information processor, a packet header processor, a sequence header processor, an aspect ratio information processor, and so on, which are not shown.

The CPU 31 further includes: the edit management information controller 32 controlling management information at the time of editing; the recordmanagement information controller 33 controlling management information at the time of recording; and the program information processor 36 managing program information sent by means of an analog broadcast wave and a digital broadcast wave. Further, the CPU 31 creates management information necessary for reproducing recorded data and sends the created management information to the data processor 13 at the end of data recording. Consequently, the management information is recorded to the HDD 14. Therefore, the CPU 31 receives information on a per data basis (segmentation information and so on) from the PS encoder 12 while encoding is underway, and from the stream processor 22 while recording of anMPEG2-TS signal is underway. The CPU 31 has a function of confirming, at the beginning of the recording, file system management information read from the hard disk, thereby finding an unrecorded area in the hard disk, and setting an area for data recording in the hard disk via the data processor 13.

The edit management information controller 32 is a management data controller editing management information corresponding to video signals and audio signals recorded in the HDD 14.

The record management information controller 33 is a management data controller controlling the recording of video signals and audio signals to the HDD 14 and performing the setting of the management information and the like.

The program information processor 36 is a data processor receiving the program information extracted by the analog tuner 11 and/or obtained by the digital tuner 21 to obtain the start/end times and the like of a program.

The display unit 34 is a display displaying an operation status of the CPU 31 and so on to a user, and is formed by, for example, a LCD element. The key input unit 35 is an input device through which a user's instruction is inputted to the CPU 31, and is, for example, a keyboard, a remote controller, or the like. For example, a remote controller type is usable as the key input unit 35.

A recording/reproducing operation of the television system 1 including the recording apparatus 10 of this embodiment will now be described.

In a case of an analog broadcast signal, the analog tuner 11 receives analog broadcast waves from the analog antenna A1, and tunes to and demodulates a specific analog broadcast wave, thereby converting the analog broadcast wave into an analog video signal and an analog audio signal, and outputs these signals to the PS encoder 12. Upon receipt of the analog video and audio signals, the PS encoder 12 A/D-converts the video and audio signals to pack (format) the converted signals, and outputs the packed signals to the data processor 13. At this time, the CPU 31 creates management information to send the created management information to the data processor 13. The data processor 13 records the received video and audio signals together with the management information to the HDD 14.

A video signal and an audio signal recorded in the HDD 14 are read by the data processor 13 to be sent to the PS decoder 15. The PS decoder 15 separates and decodes packed signals of the read video and audio signals to output them to the selector 16. The selector 16 sends the received signals to the D/A converter 17. The D/A converter 17 D/A-converts the received digital video and audio signals to output the resultant signals to the display D and the speaker SP respectively.

In a case of a digital broadcast signal, the digital tuner 21 receives digital broadcast waves from the digital antenna A2, and tunes to and demodulates a specific digital broadcast wave, thereby extracting a digital video signal and a digital audio signal. In a case of a digital broadcast, video and audio have been encoded by a broadcast station side and are in an MPEG2-TS signal format. The stream processor 22 selects necessary packets from the received MPEG2-TS signals and at the same time, converts the TS packets into recording packets to send the packets to the data processor 13. The data processor 13 records the received data to the HDD 14.

A video signal and an audio signal of a digital broadcast wave which are recorded in the HDD 14 are read out by the data processor 13 to be sent to the TS decoder 25. The TS decoder 25 separates packed signals of the read video and audio signals to decode them, and outputs the decoded video and audio signals to the selector 16. The selector 16 sends the received signals to the D/A converter 17. The D/A converter 17 D/A-converts the received digital video and audio signals to output the resultant signals to the display D and the speaker SP respectively.

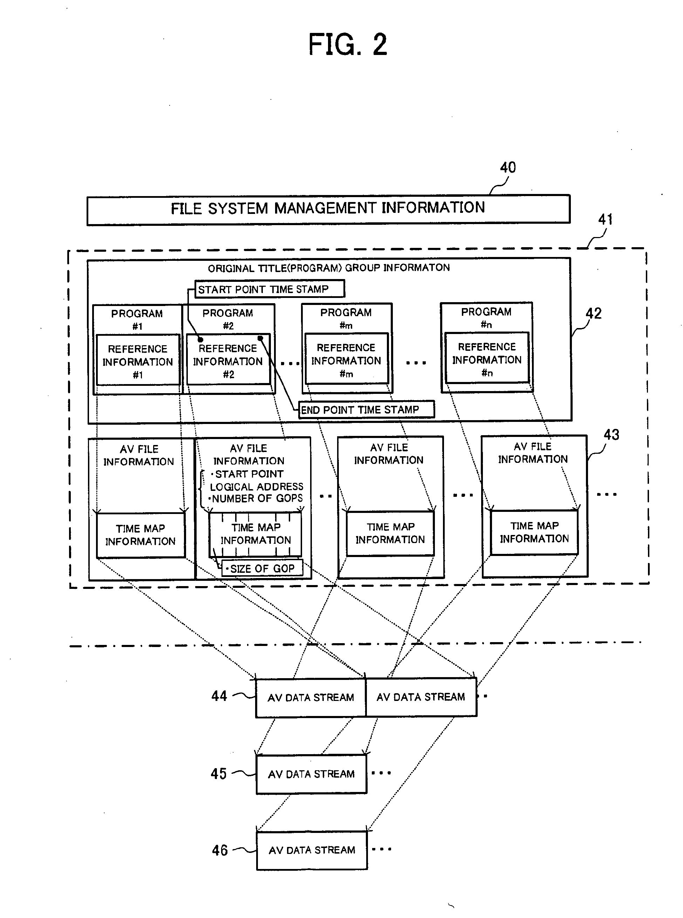

Next, the structure of data recorded in the HDD 14 by the recording apparatus 10 of this embodiment will be described in detail with reference to FIG. 2. FIG. 2 is a schematic chart showing an overview of the data structure in the recording apparatus 10 of this embodiment.

As shown in FIG. 2, data recorded in the recording apparatus 10 of this embodiment includes file system management information 40, management information 41, a first AV stream file 44, a second AV stream file 45, and a third AV stream file 46, all of which are recorded in the HDD 14.

The management information 41 manages position information, attributes, and the like of recorded data recorded in the HDD 14. The management information 41 has program group information 42 and AV file information 43.

The program group information 42 (original title group information) is information (reproduction sequence information) managing reproduction sequence of recorded contents (programs), in which pieces of information regarding individual programs are classified on a per program basis. The information regarding each of the programs has reference information linked to the AV file information which is information regarding an AV data stream (an aggregate of video and audio data of each program) that is an object to be reproduced. The reference information includes start point time stamp information and end point stamp information.

The AV file information 43 is a table for linking the program information 42 to be managed by a user to recorded data that are actually recorded. The AV file information 43 has time map information describing information about a logical address of a corresponding AV data stream in the HDD 14. Specifically, the AV file information has logical address information about a start point position of the corresponding AV data stream and information about the number of GOPs (strictly, the numbers of pieces of information in the respective GOPs, the information being classified on a per GOP basis) included in the AV file information. The time map information has pieces of information corresponding to the respective GOPs, which are classified on a per GOP basis, and each of pieces of the information has size information about the corresponding GOP. The size of a GOP is expressed by a unit capable of representing the size of the AV data stream corresponding to the GOP in a recording medium, and is expressed by, for example, the number of packs, the number of packets, or the number of packet groups each being an aggregate of a plurality of packets.

A time length of an AV data stream, that is, an effective time length of contents whose management information exists, can be found from a difference between the start point time stamp information and the end point time stamp information in the reference information, the number of GOPs included in the AV file information, or the like. Further, if a specific time position in the management information is known, a GOP existing at the specific time position is determined, and therefore, a logical address, in the recording medium, corresponding to this specific time position can be found from the information included in the AV file information, specifically, from the logical address information about the start point position and the size information about the individual GOP.

The first to third AV stream files 44 to 46 are data files including AV data streams each corresponding to a program (title: a unit a user records at a time). Each of the AV data streams included in the first to third AV stream files 44 to 46 includes an information pack, a video pack, an audio pack, a sub-picture pack, and so on. The information pack is an information package for showing attributes of the AV data stream and identifying the AV data stream and includes information indicating the time at which the reproduction of the first field of a GOP to which the information pack belongs is started, information indicating the time when the GOP is recorded, copy control information, and so on. The video pack is an information package including video data compressed in the MPEG2 format, and is composed of a pack header, a packet header, and a video data portion. The audio pack is an information package including audio data processed according to, for example, a format of linear PCM, MPEG, AC-3, or the like, and is composed of a pack header, a packet header, and an audio data portion.

The first AV stream file 44 is a data file prepared for recording and reproduction of normal recording, and the second and third AV stream files 45 and 46 are data files prepared for loop recording. Here, the "normal recording" means recording intended for saving, and the "loop recording" means repeated overwrite-recording to a predetermined area and thus is capable of saving only a predetermined time length of contents (only a predetermined number of recent programs).

The file system management information 40 complies with, for example, a UDF (Universal Disk Format) standard, and manages files in the management information 41 and the first to third AV stream files 44 to 46.

In addition to the program group information 42, play list information made up only of information managing the program reproduction sequence (reproduction sequence information) may be provided. The play list information does not have its own AV data stream and is created by the edition of (deletion from, addition to) the reference information linked to the AV file information about an original title. Specifically, by editing only the reference information without directly processing an AV data stream, it is possible to create a program composed only of necessary scenes and to create a program with unnecessary scenes deleted. FIG. 2 shows an example where the three first to third AV stream files 44 to 46 exist, but four stream files or more may exist.

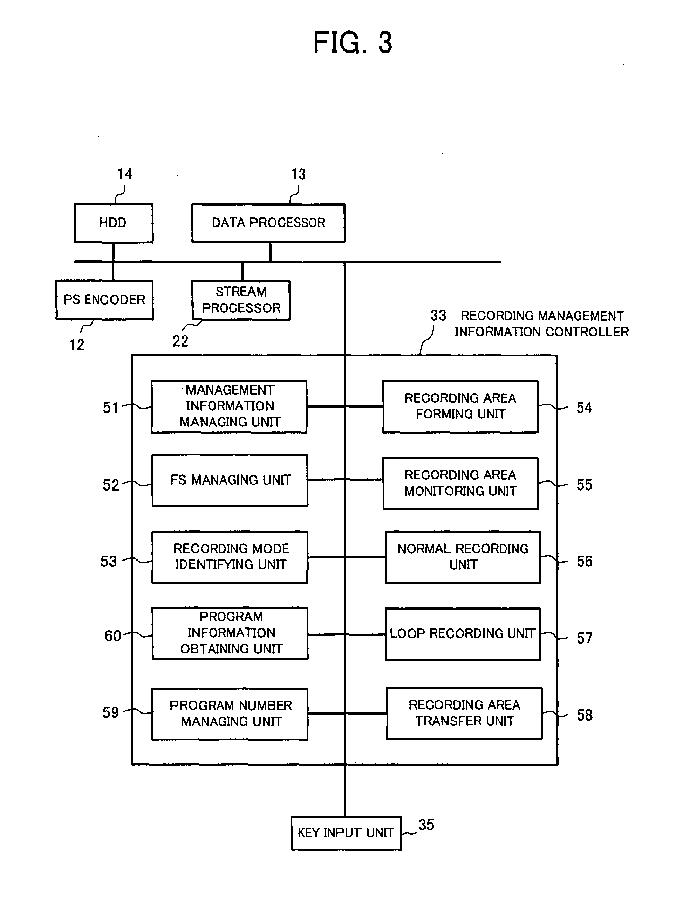

Next, the record management information controller 33 in the recording apparatus 10 of this embodiment will be described in detail with reference to FIG. 3. FIG. 3 is a block diagram showing the configuration of the record management information controller 33 shown in FIG. 1. The record management information controller 33 has a function of executing recording processing of the recording apparatus 10 of this embodiment.

As shown in FIG. 3, the record management information controller33 in this embodiment has a management information managing unit 51, a FS managing unit 52, a recording mode identifying unit 53, a recording area forming unit 54, a recording area monitoring unit 55, a normal recording unit 56, a loop recording unit 57, a recording area transfer unit 58, a program number managing unit 59, and a program information obtaining unit 60. The recording apparatus 10 of this embodiment performs the recording operation based on the data recording structure shown in FIG. 2, that is, the structure in which an AV stream file for normal recording and an AV stream file for loop recording are separated.

The management information managing unit 51 is an information processor managing the program group information 42 and the AV file information 43 shown in FIG. 2. Themanagement information managing unit 51 has a function of providing a user with the program group information recorded in the HDD 14 through the display unit 34 or the display D as, for example, "recorded title list" and setting the program group information at the time of recording. The program group information 42 managed by the management information managing unit 51 includes time information regarding each program (time information indicating a position in data recorded in the HDD 14) . The AV file information 43 managed by the management information managing unit 51 includes logical address information corresponding to the information about a logical position of recorded data.

The FS managing unit 52 is an information processor managing the file system management information 40 complying with, for example, the UDF (Universal Disk Format) standard. In the recording apparatus 10 of this embodiment, a series of recorded data of each program constitutes an AV stream file. The FS management information is information for identifying AV stream files, and the FS managing unit 52 manages the AV stream files through the FS management information.

The recording mode identifying unit 53 is a recording mode manager identifying a recording mode which is instructed by a user via the key input unit 35. The recording modes managed by the recordingmode identifyingunit 53 include two recordingmodes, namely, normal recording to perform normal recoding and loop recording to perform repeated overwrite-recording to a predetermined area. The user's instruction may be explicit, or no cancellation may be considered as the instruction. For example, the loop recording may be started upon power-on.

The recording area forming unit 54 is a manager reserving and managing recording areas in the HDD 14 . The recording area forming unit 54 has a function of reserving recording areas of the first to third AV stream files 44 to 46 in the HDD 14 in advance or setting the reserved recording areas free.

The recording area monitoring unit 55 is a monitor for monitoring the recording areas reserved by the recording area forming unit 54. The recording area monitoring unit 55 has a function of monitoring the recording areas reserved by the recording area forming unit 54 to notify the monitoring result to the normal recording unit 56 or the loop recording unit 57.

The normal recording unit 56 is a processor executing normal recording processing, and has a function of instructing the data processor 13 to normally record, to the HDD 14, video data and audio data sent from the PS encoder 12 or the stream processor 22.

The loop recording unit 57 is a processor executing loop recording processing. The loop recording unit 57 has a function of instructing the data processor 13 to loop-record, to the HDD 14, video data and audio data sent from the PS encoder 12 or the stream processor 22.

The recording area transfer unit 58 is a data transferer logically transferring data recorded as an AV data stream to/from the AV stream files. The recording area transfer unit 58 has a function of transferring a later-described predetermined area between chapters from the second or third AV stream file 45 or 46 in which the data in this area is recorded, to the first AV stream file 44. The transfer between the AV stream files is realized by a change in logical address, and therefore, is not actual transfer of a recorded location. This realizes higher-speed processing than simple transfer processing of the AV data stream.

The program number managing unit 59 is a manager managing the number of programs loop-recorded by the loop recording unit 57. The program number managing unit 59 sets the number of programs in advance based on a setting instruction accepted via the key input unit 35.

The program information obtaining unit 60 receives, from the program information processor 36, program information about a currently loop-recorded program, and obtains start time information and end time information of the program and time length information, and so on of the program.

### (Operation of the recording apparatus 10)

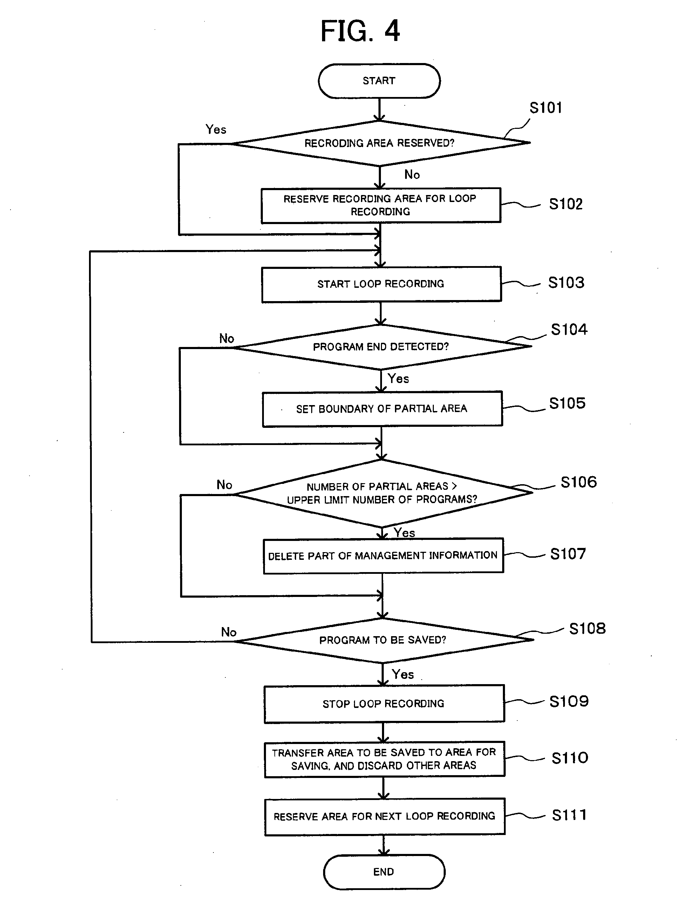

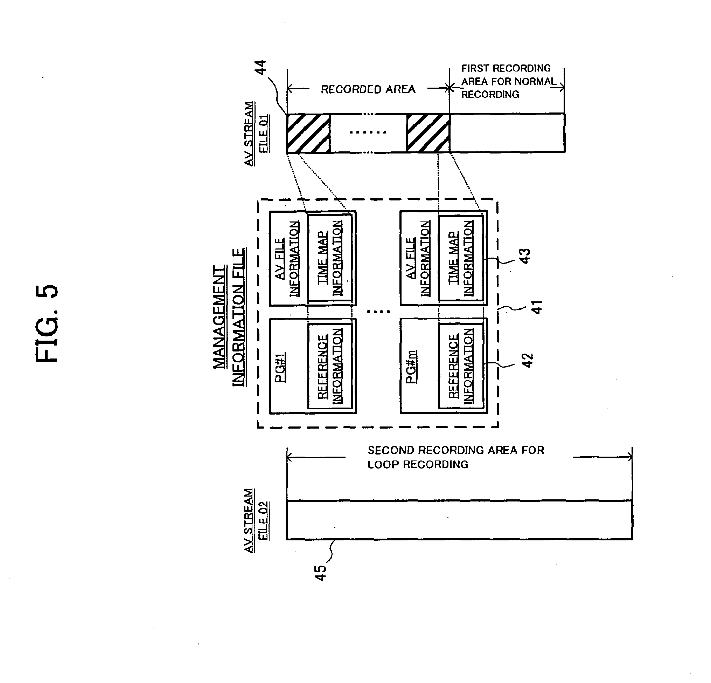

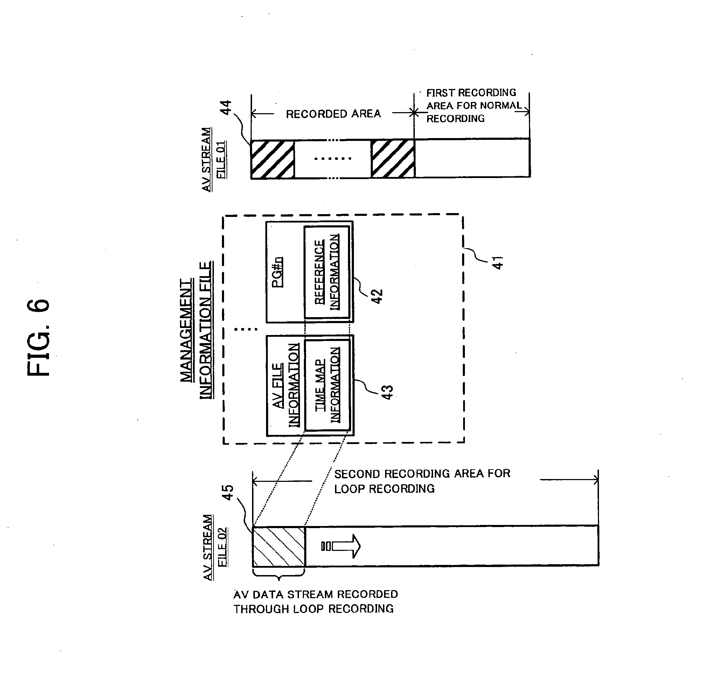

Next, the operation of the recording apparatus 10 of this embodiment will be described with reference to FIG. 4 to FIG. 11. FIG. 4 is a flowchart showing a recording operation of the recording apparatus 10 of this embodiment, FIG. 5 is a schematic chart showing a state of normal recording in this embodiment, and FIG. 6 to FIG. 11 are schematic charts showing a recording operation of loop recording of this embodiment. FIG. 6 to FIG. 11 show how the management information file and the AV stream files change in accordance with the progress of the loop recording processing of the recording apparatus 10 of this embodiment. This embodiment is an example where the recording apparatus includes the first AV stream file 44 and the second AV stream file 45 among the AV stream files shown in FIG. 2.

First, the management information 41, the first AV stream file 44, and the second AV stream file 45 in the initial state are shown in FIG. 5. Here, a first recording area for normal recording is reserved in the first AV stream file 44 used for normal recording. A second recording area for loop recording is reserved in the second AV stream file 45 used for loop recording. In the example shown in FIG. 5, as the program group information 42 regarding programs recorded through normal recording, titles PG#1 to PG#m have already been recorded and recoded areas have been formed in the first AV stream file 44 (areas diagonally hatched by bold lines in FIG. 5). Hereinafter, the illustration of these recorded areas will be sometimes omitted for convenience of description.

As shown in FIG. 5, the management information 41 comprehensively manages AV data streams recorded in the two AV stream files. That is, the AV data streams are managed by the single management information file irrespective of whether they are recorded in the first AV stream file 44 or the second AV stream file 45.

Further, when an AV data stream is recorded to the second AV stream file 45 through loop recording, an area to which the AV data stream is recorded is transferred from the second AV stream file 45 to the first AV stream file 44 after the loop recording is stopped, while consistency with the reproduction sequence is maintained. For example, in a case where a file system complying with the UDF (Universal Disk Format) standard is used, an extent corresponding to the area, in the second AV stream file 45, to which the AV data stream is recorded through loop recording, is transferred from a file entry of the second AV stream file 45 to a file entry of the first AV stream file 44. More specifically, descriptions of the file entries of the first and second AV stream files 44 and 45 are changed so that the extent indicated by the file entry of the second AV stream file 45 is indicated by the file entry of the first AV stream file 44. In this manner, the first AV stream file 44 not only is used as a recording destination for normal recording but also functions as an archive file for saving contents recorded through loop recording.

In this embodiment, a recording area of the second AV stream file 45 used for loop recording is reserved prior to the start of the recording so as to have a size large enough to record long-time contents.

Though this size depends on recording quality (compression ratio, bit rate, and the like), it is desirable to reserve a size large enough to record, with an allowance, a relatively long program having a length of about several hours, for instance. Not only the length of a program but also a transfer rate of broadcast signals should be taken into consideration, and therefore, if a standard value is set under the assumption of, for example, a situation where an AV data stream with the highest possible bit rate in the standards of terrestrial/BS/CS digital broadcasts is recorded for a long time, a recording area of a size with a relatively large allowance can be reserved.

### A. Setting of the upper limit number of programs

Prior to the start of loop recording, the upper limit value of the number of programs to be left on the loop recording (hereinafter, referred to as the upper limit number of programs) is set in the following procedures (1) and (2). The upper limit number of programs is also set in a second embodiment to be described later.

### (1) Input of the upper limit number of programs

A user inputs the upper limit number of programs. This input operation can be performed, for example, as an item of initial setting. Alternatively, this inputmaybeperformedas oneof setting items that can be called via a menu button or the like provided in a remote controller of the recording apparatus 10.

### (2) Storage of the upper limit number of programs

Next, the inputted upper limit number of programs is stored in the recording apparatus 10. The upper limit number of programs is used in later-described loop processing.

In conventional loop recording, the loop time is set in such pre-processing. On the other hand, in loop recording in the recording apparatus 10, a user sets the upper limit number of programs. Here, in deciding a recording capacity necessary per program, a standard model program is assumed. Values of the time length, transfer rate, and the like vary depending on individual broadcast programs. Therefore, a model program type is set with a relatively largeallowance, and for example, aprogramwith "HD (HighDefinition) video, the highest possible transfer rate in digital broadcast standards, and a four-hour time length" is set as a model.

Such model values not only are used in loop recording to be described later but also may be presented to a user when the user sets the upper limit number of programs. The model program type is changeable by a user's operation. However, fixed values may be used for the model program type.

### B. Loop recording

Next, the operation of loop recording will be described in detail. Upon receipt of a loop recording instruction by, for example, a user's operation or the like, the recording mode identifying unit 53 instructs the loop recording unit 57 to execute loop recording processing. Upon receipt of the loop recording instruction, the loop recording unit 57 makes an inquiry to the recording area monitoring unit 55 as to whether or not a recording area for loop recording has been reserved (Step 101, hereinafter, referred to as "S101" and the like) . Upon receipt of the inquiry, the recording area monitoring unit 55 makes an inquiry to the FS managing unit 52 as to in which of the first AV stream file 44 and the second AV stream file 45 the recording area for loop recording has been reserved. Since loop recording is assigned to the second AV stream file 45 in this example, the FS managing unit 52 notifies in reply, a file system where the second AV stream file 45 exists, as a file system for loop recording. The recording area monitoring unit 55 determines whether or not the recording area for loop recording (hereinafter, referred to as "a second recording area") has been reserved in the second AV stream file 45 in the file system which is notified in reply by the FS managing unit 52, and notifies the result of the determination to the loop recording unit 57 in reply.

If the result of the determination shows that the second recording area has not been reserved (No at S101), the loop recording unit 57 instructs the recording area forming unit 54 to reserve the second recording area. The recording area forming unit 54 forms the second recording area in the second AV stream file 45 in the HDD 14 and notifies logical addresses of its start and end points to the loop recording unit 57 in reply (S102) . As the second recording area, the recording area forming unit 54 reserves an area having a size corresponding to the stored upper limit number of programs.

At this point in time, the upper limit number of programs has been stored. Therefore, as previously described, the recording area of an AV stream file 02 is reserved so as to have a size large enough to record the model programs which are set with a relatively large allowance as, for example, having "HD (High Definition) video, the highest possible transfer rate in digital broadcast standards, and the four-hour time length", in the number equal to the set upper limit number of programs. At this time, in reserving the recording area of the AV stream file 02, a further margin may be reserved for safety.

In this example, the set upper limit number of programs is assumed to be "4". That is, in the following example in FIG. 6 to FIG. 11, a maximum of four partial areas in contents continuously recorded through loop recording can exist. That is, a maximum of four programs corresponding to the partial areas are left in the contents.

After the recording area is reserved, the loop recording unit 57 creates the management information 41 in the initial state, which is a state at the start of the recording, to store the created management information 41 in an internal memory. Specifically, the loop recording unit 57 instructs the management information managing unit 51 to create the management information 41 pertaining to the whole contents to be recorded, among the program group information 42, the reference information, and the AV file information 43. Upon receipt of the instruction, the management information managing unit 51 receives, from the loop recording unit 57, logical addresses of the start point and the end point of the second recording area which have been notified from the recording area forming unit 54, and sets these logical addresses as the time map information included in the AV file information 43.

The loop recording unit 57 records video data and audio data sent from the PS encoder 12 or the stream processor 22, to the second recording area reserved in the second AV data stream file 45 in the HDD 14 (S103). Incidentally, in the course of the recording to the second recording area, the management information managing unit 51 creates, from moment to moment, the time map information reflecting the progress of the AV data stream recording to record the created time map information to the AV file information 43 in the memory.

FIG. 6 shows a state where the loop recording to the second recording area in the second AV stream file 45 is underway. In FIG. 6, a content is loop-recorded as a new title PG#n. As shown in FIG. 6, an AV data stream recorded though loop recording (a portion diagonally hatched by fine lines) is recorded in the second recording area, and the time map information as the management information corresponds to the AV data stream recorded in the second recording area. In the state shown in FIG. 6, a programwhose recording started at the start of the loop recording has not ended.

Next, it is determined whether or not an end of the program has been detected in the currently loop-recorded contents (S104). The end of the program is detected in linkage with each program which is a unit displayed in an EPG (Electronic Program Guide) window. One example of the method to detect the end of the program is to use information obtained from the program information used for the display of the EPG window (the start time and end time of the program, the time length of the program, or the like), time information obtained from a clock provided in the recording apparatus 10, and information about the time length of the partial area in the contents and the like. Any method may be used for detecting the end of the program.

If the end of the program is detected, the flow goes to the subsequent Step S105 . On the other hand, if the end of the program is not detected, the flow skips Step S105 and goes to Step S106.

Further, boundary information of the partial area in the contents continuously recorded through loop recorded is set at a position of the end of the program detected at Step S104 (Step S105). For example, in the recording apparatus 10 capable of setting a partial area as a chapter in the currently recorded contents, the chapter is divided at the position of the end of the program. However, this is only an example, and any method capable of setting a partial area in the currently recorded contents in some form or other may be used.

In any case, a partial area is set in the contents continuously recorded through loop recording, in linkage with a program which is a unit displayed in the EPG window. That is, each partial area corresponds to each program displayed in the EPG window, and the number of the partial areas in the contents continuously recorded through loop recording is the number of programs included in the contents.

Next, the number of the partial areas in the contents continuously recorded through loop-recording, that is, the number of programs included in the contents is evaluated, and according to the evaluation result, the flow branches off (Step S106).

Here, the upper limit number of programs has been stored in the recording apparatus 10 of the embodiment. The upper limit number of programs and the number of the partial areas in the currently recorded contents (that is, the number of the programs in the contents) are compared. If the number of the partial areas in the currently recorded contents exceeds the upper limit number of programs, the flow goes to Step S107. If not, the flow skips Step S107 and goes to Step S108.

At Step S107, an older partial area in the temporal order among the currently existing partial areas is deleted, so as to make the number of the partial areas in the currently recorded contents equal to or smaller than the upper limit number of programs. Concretely, an older portion of the management information in the temporal order is deleted in a unit of a partial area.

Conventionally, since loop recording has been controlled so that the time length of the contents does not exceed the loop time, the recording area is saturated when the time length of the contents reaches the loop time. On the other hand, in the recording apparatus 10 of this embodiment, the recording area is saturated when the number of partial areas in the contents (the number of programs) reaches the upper limit number of programs, and therefore, the recording area is not necessarily saturated when the time length of the contents reaches a predetermined value.

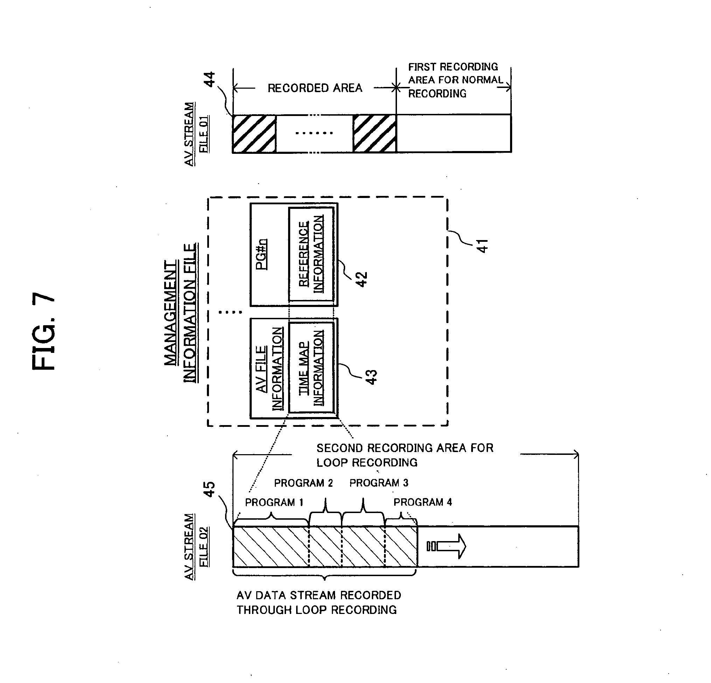

FIG. 7 shows a state where the loop recording to the second AV stream file 45 has progressed a little further from the state shown in FIG. 6. Specifically, in accordance with the progress of the loop recording, pieces of the boundary information of partial areas are set at the positions of ends of programs, and consequently, four partial areas exist in the contents continuously recorded through loop recording. Specifically, three programs already broadcast exist in the contents, and recording of the fourth program currently on air is underway.

Incidentally, as previously described, in setting the boundary information of the partial areas, the program information used for the display of the EPG window is referred to, and each of the partial areas in the contents is made to correspond to a program which is a unit displayed in the EPG window.

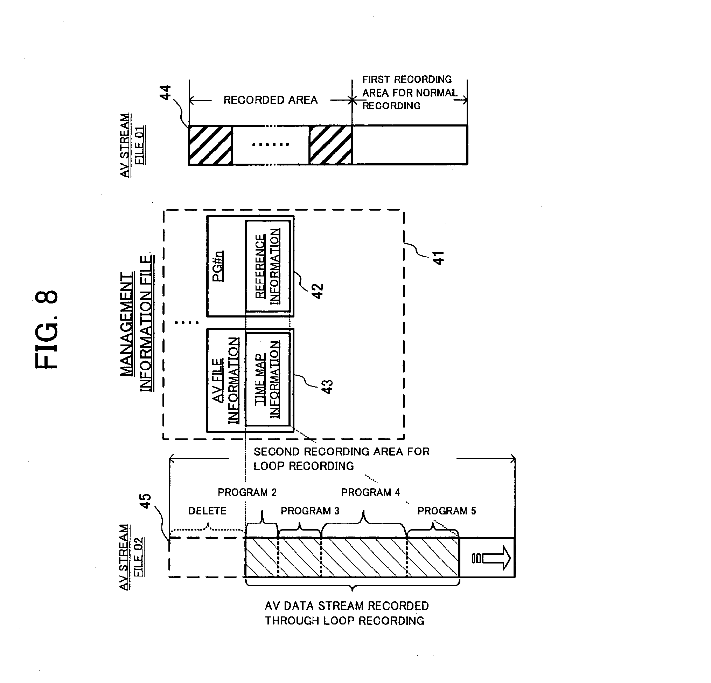

FIG. 8 shows a state where the loop recording to the second AV stream file 45 has further progressed. Here, the AV data stream recording to the AV stream file 02 has further progressed, and recording of the fifth program from the start of the loop recording is underway.

As previously described, the upper limit number of programs is set to "4" in this example. Therefore, the management information about the partial area corresponding to the oldest first program is deleted, so that the upper limit number 4 of programs is not exceeded.

The end point as the time map information included in the management information indicates a logical address of the position to which the AV data stream recording has progressed, and the time corresponding to this recording progress position is described as the end point time stamp information included in the reference information. Meanwhile, the management information about the partial area corresponding to the first program has been deleted. Therefore, the start point as the time map information included in the management information has been updated so as to indicate a logical address of a start position of a partial area corresponding to the second program which is the oldest among the programs left on the current loop recording. The time corresponding to the updated position is described as new start point time stamp information in the reference information.

In FIG. 8, the second program to the fifth program correspond to four programs. Among the AV data streams, only portions indicated by the management information are effective AV data streams. On the other hand, the portion which has been corresponding to the first program and whose management information has been deleted is an invalid AV data stream. This portion is overwritten by a new AV data stream when a seek of the second AV stream file 45 occurs as the loop recording progresses.

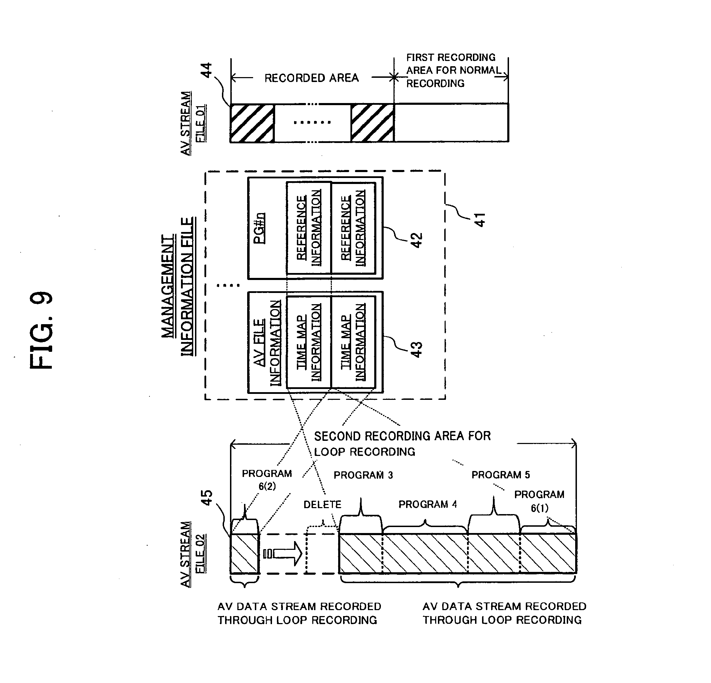

FIG. 9 shows a state where the loop recording to the AV stream file 02 has still further progressed. Here, recording of the sixth program from the start of the loop recording is underway. Here, as in FIG. 8 previously described, the management information about the partial area corresponding to the second program which is the oldest at this point in time is deleted, so that the upper limit number 4 of programs is not exceeded.

In the example in FIG. 9, the end point of the AV stream file 02 is reached in the course of the recording of the sixth program, and consequently, a seek of a file pointer occurs and an AV data stream is overwrite-recorded to the area where the invalid AV data stream with its management information deleted was recorded. Therefore, the sixth program is recorded dividedly, the first half as a program 6(1) and the latter half as a program 6(2).

FIG. 9 shows an example where different sets of the reference information and the time map information are provided for the respective AV data streams of the program 6 (1) and the program 6(2) which are separately recorded. However, one set of the reference information and the time map information may comprehensively correspond to the both AV data streams.

At Step S108, it is determined whether or not a program selected from the programs left on the loop recording is to be saved, and the flow branches off according to the determination result.

If no saving is necessary, the flow returns to the aforesaid Step S103, and the loop recording is continued. On the other hand, if the selected program is to be saved, the flow goes to the next Step S109.

Here, upon receipt of a program save instruction which is given by a user pressing a save button of the key input unit 35 or the like (Yes at S108), the program information obtaining unit 60 receives, from the program information processor 36, the program information on the currently loop-recorded program to obtain the start time information and the end time information of the program, the time length information of the program, and so on. The program information obtaining unit 60 sends the obtained time information/time length information to the program number managing unit 59.

Here, how the save instruction is given via the key input unit 35 and the display D will be described.

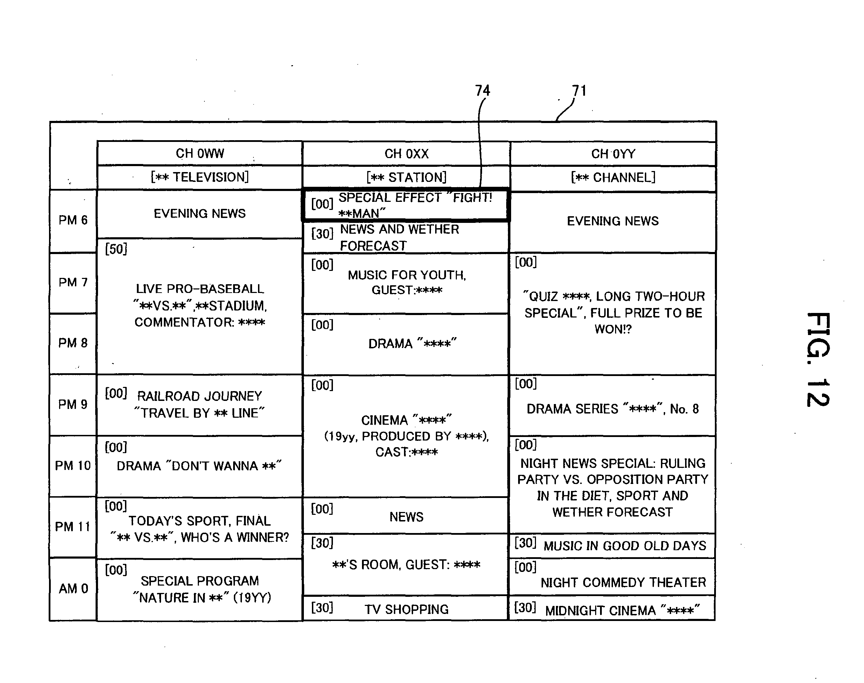

FIG. 12 to FIG. 17 are a series of views showing changes of the screen display of the electronic program guide in a video recorder/reproducer to which the present invention is applied. The series of views also show changes of the screen display when a save operation of a program is performed in the display screen of the electronic program guide.

Here, it is assumed that the upper limit number of programs is "4" . Further, partial areas in the contents correspond to programs displayed in the EPG window as previously described.

FIG. 12 shows the display contents of the display D when the EPG window is displayed immediately after loop recording is started. The management information managing unit 51 displays an EPG display on the display D. Here, an electronic program guide 71 is displayed on a television screen, and a currently loop-recorded program 74 is highlighted in the EPG display 73.

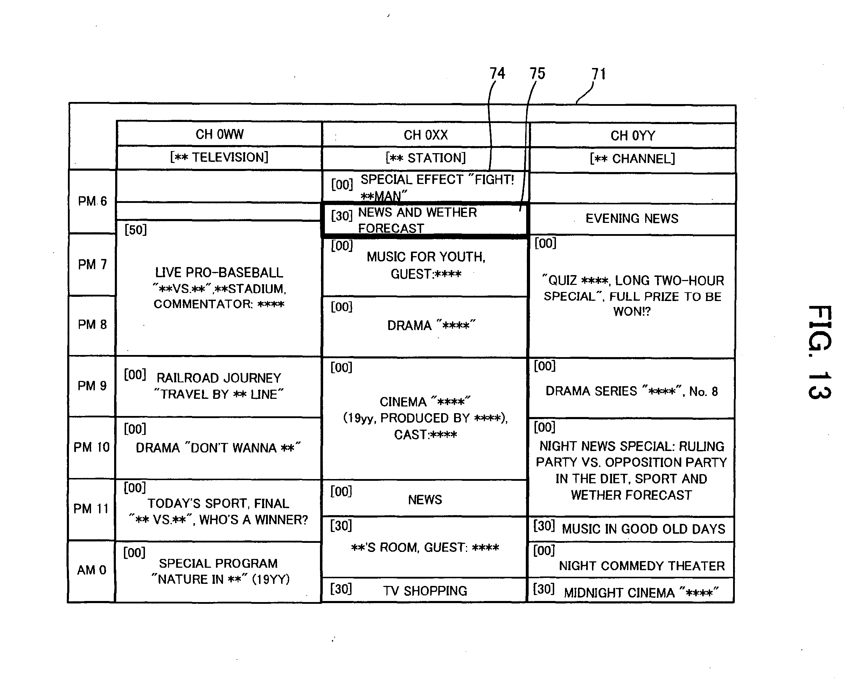

Next, FIG. 13 shows a state of the television screen when the EPG window is displayed at the time when the loop recording has further progressed. In this example, the second program from the start of the loop recording is currently recorded, and the second program 75 is highlighted.

Here, in general, a program whose broadcasting has ended is not longer displayed in the EPG window, but in the recording apparatus 10 of this embodiment, a program left on the loop recording, even after its broadcasting ends, is continuously displayed in the EPG window as long as it is left on the loop recording. As a result, which programs are left on the loop recording is presented to a user.

In the example in FIG. 13, information on the program 74 whose recording was underway at the point in time in FIG. 12 described above is continuously displayed in the EPG window, thereby letting a user know that this program is still left on the loop recording.

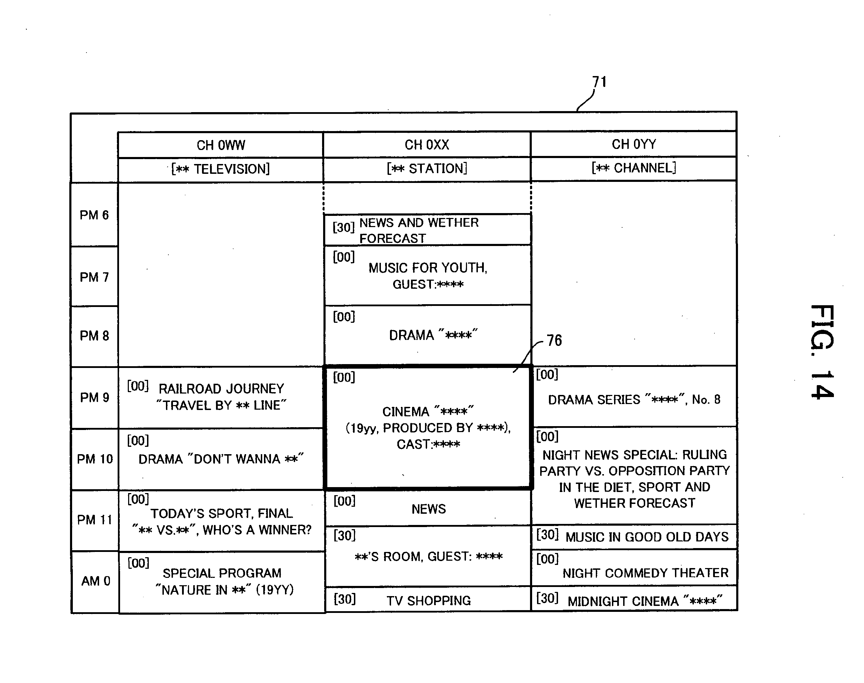

Next, FIG. 14 shows a state of the television screen when the EPG window is displayed at the time when the loop recording has still further progressed. In this example, the fifth program from the start of the loop recording is currently recorded, and the fifth program 76 is highlighted. As previously described, the upper limit number of programs is set to "4" in this example. Therefore, in order not to exceed the upper limit number 4 of programs, the management information about a partial area corresponding to the oldest program among the partial areas in the contents is deleted. In order to let the user know this, the information about the program 74 whose recording was underway at the point in time in FIG. 12 described above is deleted from the EPG window.

In the example in FIG. 14, past broadcasting time zones are displayed in order to present programs left on the loop recording. An alternative method is that a current broadcasting time zone is displayed on the top, and only when a user scrolls the EPG window in order to confirm programs left on the loop recording, the past broadcasting time zones are displayed.

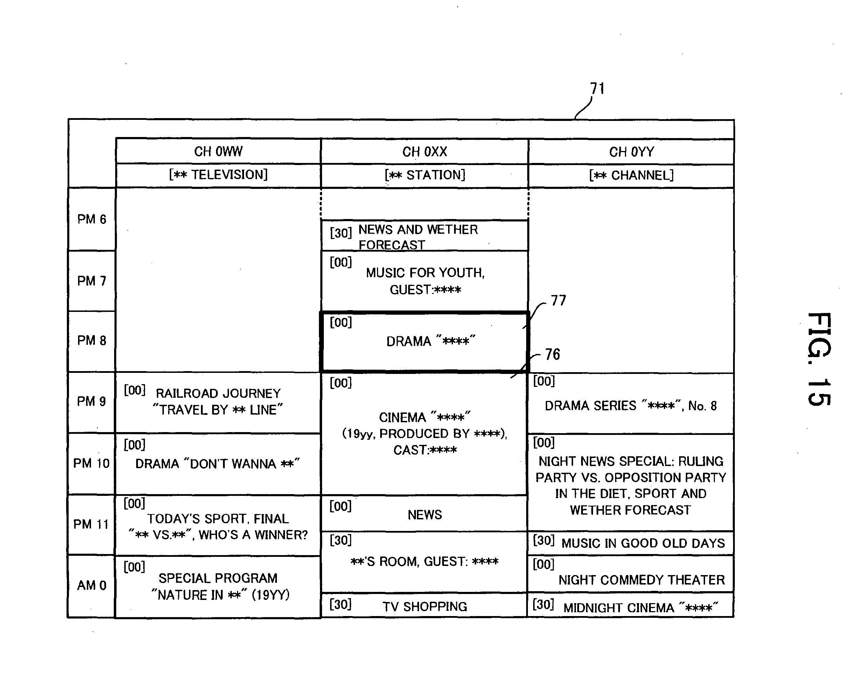

FIG. 15 shows a state of the television screen when a program to be saved is selected in the EPGwindow at the point in time previously described with reference to FIG. 14, that is, at the time when the recording of the fifth program from the start of the loop recording is underway. The currently loop-recorded program 76 was originally highlighted. At this point in time, a program 77 whose broadcasting has already ended but which is left on the loop recording (in this example, the fourth program from the start of the loop recording) is highlighted and thus is selected as a program to be saved, by a remote controller operation or the like.

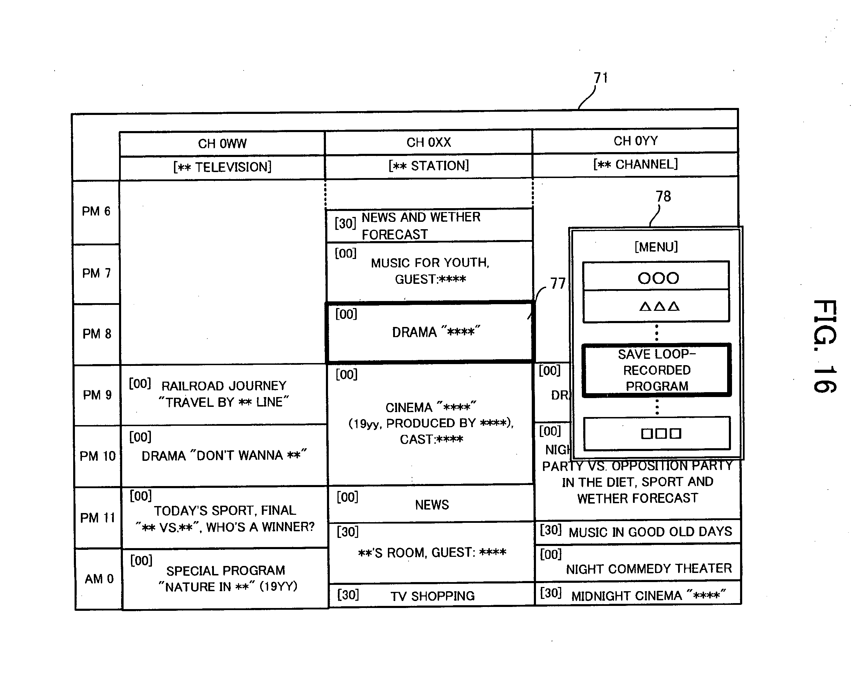

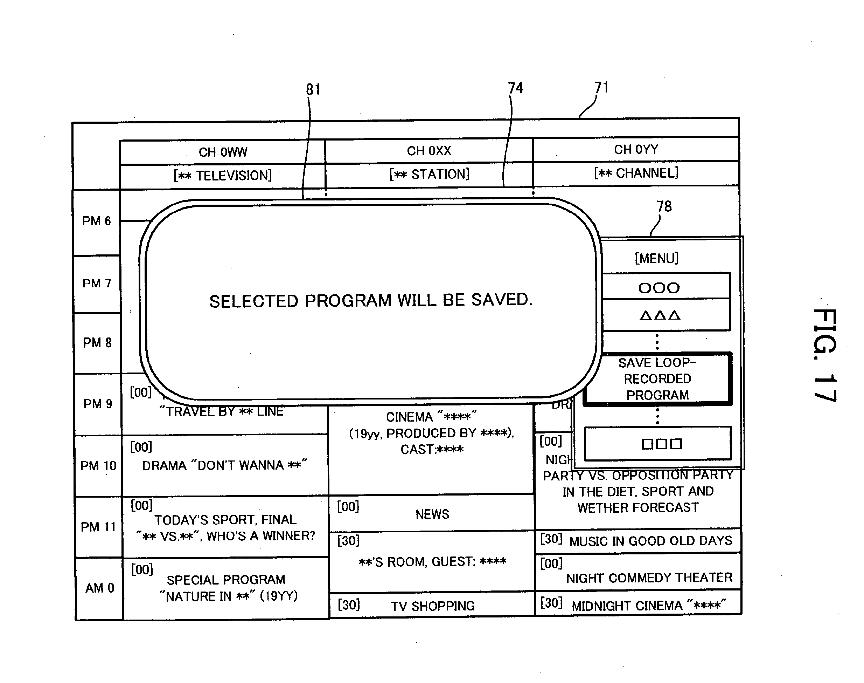

Next, FIG. 16 shows a state of the television screen when a menu of a program save operation is called. In the example in FIG. 16, a menu window 78 is displayed in response to a user's operation of the remote controller or the like. Subsequently, in response to the user's operation of a remote control cursor button, a loop-recorded program save menu is selected, and the menu is highlighted. Finally, FIG. 17 shows display contents of the display D when the program save operation is executed by the user. Here, in response to the user' s operation of the remote controller, a program save function selected on the menu window as shown in FIG. 17 is executed, and a message 81 is displayed.

Thus continuing to display, in the EPG window, information on a program left on the loop recording even after its broadcasting ends allows a user to uniquely identify the program left on the loop recording. Further, with a simple operation in the EPG window, it is possible to save a program in its entirety, not in an incomplete state such as a state where only its portion from the middle to the latter half is left.

If the program is tobe saved (Yes at S108), the loop recording unit 57 stops the loop recording (S109) . Here, the AV data stream recording to the second AV stream file 45 is stopped and also the update processing of the management information 41 such as the creation of the time map information is stopped.

When the loop recording is stopped, the recording area transfer unit 58 transfers an area where the AV data stream indicated by the management information about a partial area corresponding to the program selected as the save target is recorded, from the second AV stream file 45 to the first AV stream file 44 which is an archive file (S110).

For example, in a case where a file system complying with the UDF (Universal Disk Format) standard is used, the recording area transfer unit 58 transfers an extent corresponding to the area in which the AV data stream corresponding to the program selected as the save target is recorded, from a file entry of the second AV stream file 45 to a file entry of the first AV stream file 44. More specifically, descriptions of the file entries of the first AV stream file 44 and the second AV stream file 45 are changed so that the extent indicated by the file entry of the second AV stream file 45 is indicated by the file entry of the first AV stream file 44.

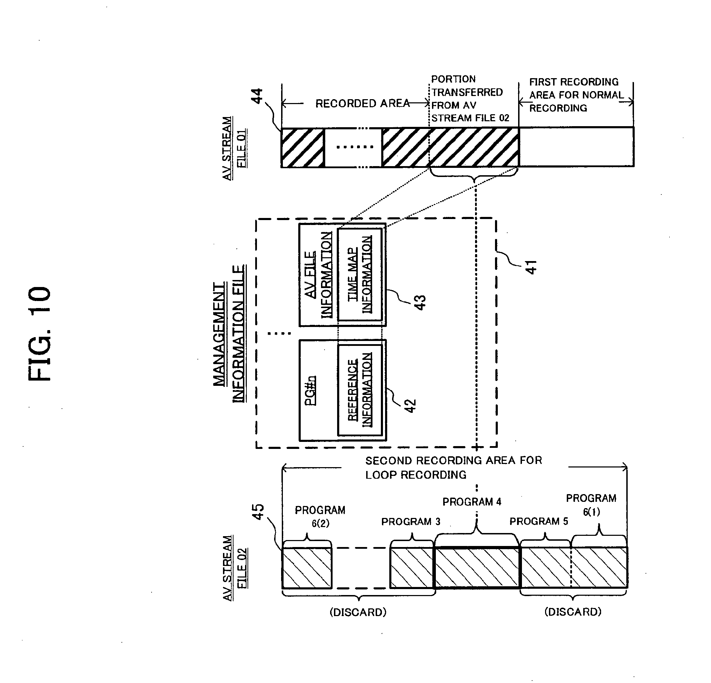

FIG. 10 shows a state where a save instruction of a program is performed by a user. In this example, the fourth program from the start of the loop recording among the programs left on the loop recording is selected as a program to be saved, and a portion of the recording area corresponding to the fourth program is transferred from the AV stream file 02 to the AV stream file 01.

For example, in a case where a file system complying with the UDF (Universal Disk Format) is used, an extent corresponding to an area where an AV data stream indicated by the management information about a partial area corresponding to the fourth program selected as the save target is recorded is transferred from a file entry of the second AV stream file 45 to a file entry of the first AV stream file 44. More specifically, description of the file entries of the first AV stream file 44 and the second AV stream file 45 are updated so that the extent indicated by the file entry of the second AV stream file 45 is indicated by the file entry of the first AV stream file 44. At the same time, the time map information about the content PG#n is also updated so as to indicate a logical address in the first AV stream file 44 for normal recording which is a transfer destination. Areas not to be transferred other than the partial area corresponding to the fourth program are set to an unused state, and will be re-used for the next loop recording.

Here, in a case of loop recording, there may be a case where the area in which the AV data stream corresponding to the program to be saved is recorded exists dividedly as a first half and a latter half in a tail portion and a head portion of the recording area in the second AV stream file 45 respectively. In this case, at the time of the transfer from the second AV stream file 45 to the first AV stream file 44, the recording area transfer unit 58 has to transfer these areas while maintaining consistency with reproduction sequence. In addition, the recording area transfer unit 58 discards AV data streams not corresponding to the program to be saved. This is intended to set the areas in which the AV data streams not to be transferred are recorded to an unused state, and to reuse these areas for the next recording. At the time of this transfer processing, the time map information included in the management information 41 is updated by the recording area transfer unit 58 so as to indicate the logical address in the first AV stream file 44. Therefore, the management information stored in the memory is written to the management information file after the transfer processing is finished.

Finally, the recording area forming unit 54 sets a predetermined size of vacant area again in the second AV stream file 45, thereby making the second AV stream file 45 usable for the next loop recording as a new recording destination file (S111). This process is the same as the aforesaid process at Step S102.

Also at this Step S111, similarly at the aforesaid Step S102, in preparation for the next loop recording, the recording area of the AV stream file 02 is reserved so as to have a size large enough to record the model programs which are set with a relatively large allowance as having, for example, "HD (High Definition) video, the highest possible transfer rate in the digital broadcast standards, and the four-hour time length", in the number equal to the stored upper limit number.

At this time, in reserving the recording area of the AV stream file 02, a margin may be further provided for safety.

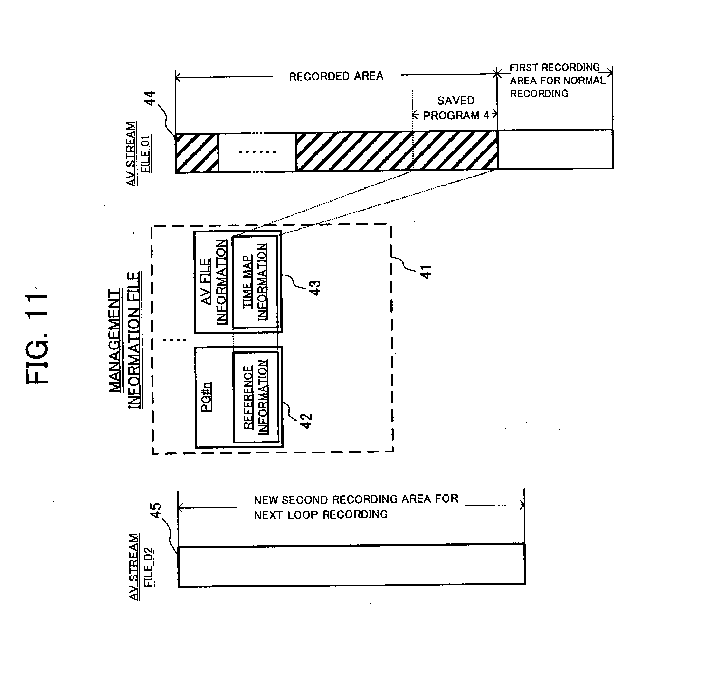

FIG. 11 shows a state after the completion of the transfer of the extent of the area in which the fourth program selected as the save target is recorded. Here, in preparation for new loop recording, a predetermined size of vacant area is reserved in the second AV stream file 45 after the save processing of its contents has been finished.

Since the management information is thus deleted in a unit of a partial area corresponding to a program, it is possible to save a program in its entirety without leaving, on the loop recording, the program in an incomplete state such as a state where only its portion from the middle to the latter half is left.

As described above, according to the recording apparatus 10 of this embodiment, the management information managing unit 51 manages the management information of normal recording and the management information of loop recording through the common program group information 42 and AV file information 43, which makes it possible to present the management information as the program information to a user without any distinction between normal recording and loop recording.

Further, according to the recording apparatus 10 of this embodiment, since a relatively large area is reserved as a loop recording area, a currently recorded program can be recorded in its entirety even if a save instruction of the program is given during the loop recording. Further, according to the recording apparatus 10 of this embodiment, the loop recording is controlled not based on the time length but based on the number of partial areas corresponding to programs, and the management information is deleted inaunitofapartialarea (thatis, on a per program basis). Therefore, it is possible to save a program in its entirety without leaving the program in an incomplete state such as a state where only its portion from "the middle to the latter half" is left, which gives a user an improved convenience. Further, since programs stored on the loop recording are continuously displayed in the EPG window even after their broadcasting ends, a program can be uniquely identified, which gives a user an improved convenience.

### (Second Embodiment)

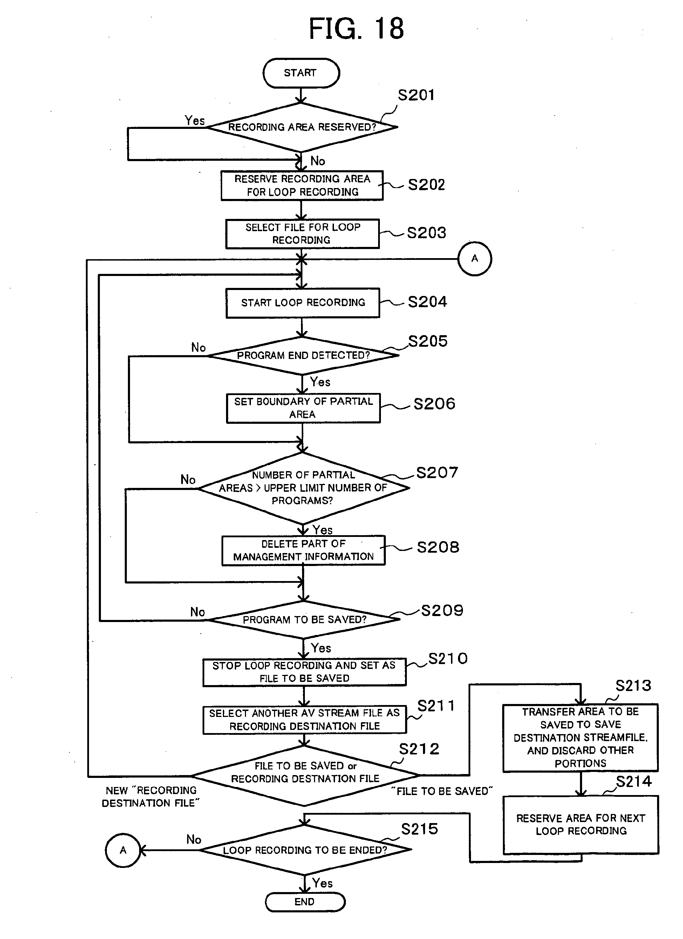

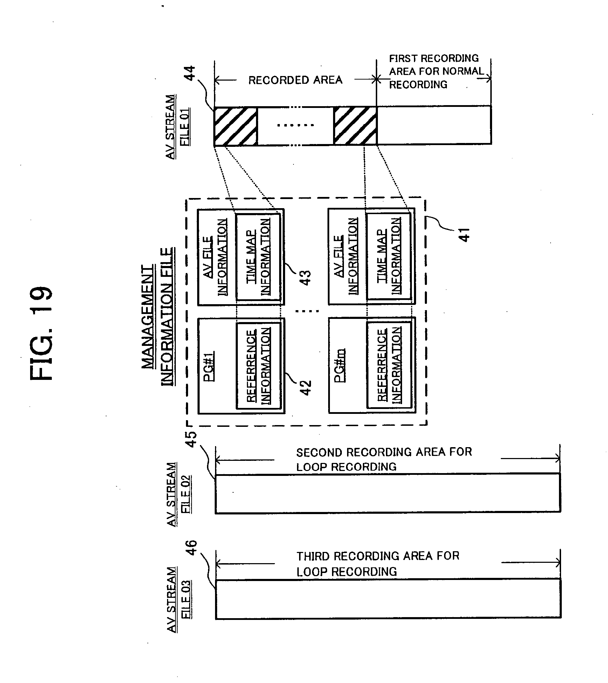

Next, a recording apparatus according to another embodiment of the present invention will be described with reference to FIG. 18 to FIG. 26. FIG. 18 is a flowchart showing a loop recording operation of a recording apparatus according to a second embodiment of the present invention, and FIG. 19 to FIG. 26 are schematic charts showing the loop recording operation of the same. The recording apparatus of the second embodiment has the same configuration as that of the recording apparatus of the first embodiment shown in FIG. 1 and FIG. 3, and is different only in that it includes a plurality of loop recording areas. Therefore, redundant description will be omitted.

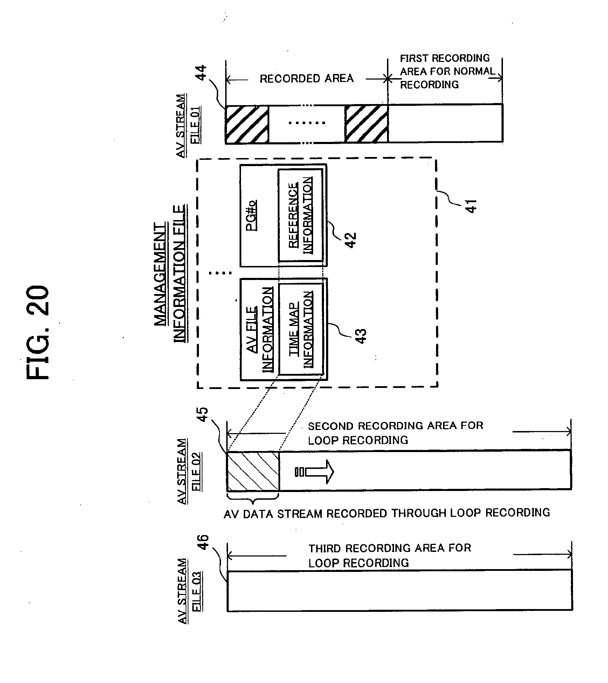

It is assumed here that the upper limit number of programs is set to "4". Specifically, in the following example in FIG. 20 to FIG. 26, a maximum of four partial areas can exist in the contents continuously recorded through loop recording. Therefore, a maximum of four programs corresponding to partial areas are left in the contents.

In this embodiment, two AV stream files are used, and a recording area is transferred from one of these AV stream files to a first AV stream file 44 as an archive file, in parallel to loop recording to the other AV stream file, thereby realizing the saving of contents. In the second embodiment as in the first embodiment, recording areas of a second AV stream file 45 and a third AV stream file 46 which are used for loop recording are reserved so as to have a sufficiently large size, prior to the start of the recording.

FIG. 19 shows management information 41, the first AV stream file 44, and the second AV stream file 45 in the initial state. Here, a first recording area for normal recording is reserved in the first AV stream file 44 used for normal recording. A second and a third recording area for loop recording are reserved in the second AV stream file 45 and the third AV stream file 46 used for loop recording. In the example shown in FIG. 19, as program group information 42 regarding programs recorded through normal recording, titles PG#1 to PG#m have already been recorded, and recorded areas are formed in the first AV stream file 44.

As shown in FIG. 19, the management information 41 comprehensively manages AV data streams recorded in the three AV stream files . That is, the AV data streams are managed by the single management information file irrespective of whether they are recorded in the first AV stream file 44, the second AV stream 45 file, or the third AV stream file 46.

When an AV data stream is recorded to the second or third stream file 45 or 46 through loop recording, an area to which the AV data stream is recorded is transferred from the second or third AV stream file 45 or 46 to the first AV stream file 44 after the loop recording is stopped, while consistency with the reproduction sequence is maintained. For example, in a case where a file system complying with the UDF (Universal Disk Format) standard is used, an extent corresponding to the area in the second or third AV stream file 45 or 46 to which the AV data stream is recorded through loop recording is transferred from a file entry of the second or third AV stream file 45 or 46 to a file entry of the first AV stream file 44. More specifically, descriptions of the file entries of the first AV stream file 44 and the second or third AV stream file 45 or 46 are changed so that the extent indicated by the file entry of the second or third AV stream file 45 or 46 is indicated by the file entry of the first AV stream file 44. In this manner, the first AV stream file 44 not only is used as a recording destination of normal recording but also functions as an archive file for saving the contents recorded through loop recording.

Also in this embodiment, a recording area of the second AV stream file 45 used for loop recording is reserved prior to the start of the recording so as to have a size large enough to record the long-time contents.

Though this size depends on recording quality (compression ratio, bit rate, and the like), it is preferable to reserve a size large enough to record, with an allowance, a relatively long program having a length of about several hours, for instance. Not only the length of a program but also a transfer rate of broadcast signals should be taken into consideration, and therefore, if a standard value is set under the assumption of, for example, a situation where an AV data stream with the highest possible bit rate in the standards of terrestrial/BS/CS digital broadcasts is recorded for hours, the recording area of a size with a relatively large allowance can be reserved.

Next, the operation of loop recording will be described in detail. When a user gives a loop recording instruction by, for example, pressing a loop recording button of the key input unit 35, the recording mode identifying unit 53 receiving the instruction instructs the loop recording unit 57 to execute loop recording processing. Upon receipt of the loop recording instruction, the loop recording unit 57 makes an inquiry to the recording area monitoring unit 55 as to whether or not a recording area for loop recording has been reserved (S201) . Upon receipt of the inquiry, the recording area monitoring unit 55 makes an inquiry to the FS managing unit 52 as to in which one of the first to third AV stream files 44 to 46 the recording area for loop recording has been reserved. In this example, since loop recording is assigned to the second and third AV stream files 45 and 46, the FS managing unit 52 notifies in reply, a file system where the second or third AV stream file 45 or 46 exists, as a file system for loop recording. The recording area monitoring unit 55 determines whether or not the recording area for loop recording (hereinafter, referred to as "a second recording area" or "a third recording area") has been reserved in the second or third AV stream file 45 or 46 in the file system notified in reply by the FS managing unit 52, and notifies the result of the determination to the loop recording unit 57 in reply. Here, the description will be given on assumption that the second recording area is reserved in the second AV stream file 45.

If the result of the determination shows that the second or third recording area has not been reserved (No at S201), the loop recording unit 57 instructs the recording area forming unit 54 to reserve the second recording area. The recording area forming unit 54 forms the second recording area in the second AV stream file 45 in the HDD 14 and notifies logical addresses of its start and end points to the loop recording unit 57 in reply (S202).

At this point in time, the upper limit number of programs set by the previously described process has been stored. Therefore, as previously described, the recording areas of an AV stream file 02 and an AV stream file 03 are reserved so as to have a size large enough to record model programs which are set with a relatively large allowance as having, for example, "HD (High Definition) video, the highest possible transfer rate in digital broadcast standards, and the four-hour time length", in the number equal to the stored upper limit number of programs. At this time, in reserving the recording areas for the AV stream file 02 and the AV stream file 03, a further margin may be reserved for safety.

After the recording area is reserved, the loop recording unit 57 selects the second AV stream file 45 as the recording area for loop recording, and creates the management information 41 in the initial state, which is a state at the start of the recording, to store the created management information 41 in an internal memory (S203). Specifically, the loop recording unit 57 instructs the management information managing unit 51 to create the management information 41 pertaining to the whole contents to be recorded, among the program group information 42, the reference information, and the AV file information 43. Upon receipt of the instruction, the management information managing unit 51 receives, from the loop recording unit 57, logical addresses of the start point and the end point of the second recording area which have been notified from the recording area forming unit 54, and sets these logical addresses as the time map information included in the AV file information 43.

The loop recording unit 57 records video data and audio data sent from the PS encoder 12 or the stream processor 22, to the second recording area reserved in the second AV data stream file 45 in the HDD 14 (S204).

Incidentally, in the course of the recording to the second recording area, the management information managing unit 51 creates, from moment to moment, the time map information reflecting the progress of the AV data stream recording to record the time map information to the AV file information 43 in the memory. FIG. 20 shows a state where the loop recording to the second recording area in the second AV stream file 45 is underway. In FIG. 20, a content is recorded through loop recording as a new title PG#o. As shown in FIG. 20, an AV data stream recorded through loop recording (a portion diagonally hatched by fine lines) is recorded in the second recording area, and the time map information as the management information corresponds to the AV data stream recorded in the second recording area. In the state shown in FIG. 20, a program recorded from the start of the loop recording has not ended yet.

Next, at Step S205, it is determined whether or not an end of the program has been detected in the contents continuously recorded through loop-recording, and according to the determination result, the flow branches off. One example of the method to detect the end of the program is to use information about the start time and end time of the program, the time length of the program, or the like obtained from program information used for the display of the EPG window, time information obtained from a clock provided in the recording apparatus 10 of this embodiment, and information about the time length of the partial area in the contents and the like. Any method may be used, provided that the method achieves the object of detecting the end of the program in linkage with a program which is a unit displayed in the EPG window.

If the end of the program is detected, the flow goes to the subsequent Step S206. On the other hand, if the end of the program is not detected, the flow skips Step S206 and goes to Step S207.

At Step S206, boundary information of the partial area in the contents continuously recorded through loop recording is set at a position of the end of the program detected at Step S205. For example, some video recorder/reproducer can set a partial area called a chapter in the currently recorded contents, and in such a video recorder/reproducer, the chapter is divided at the position of the end of the program. However, this is only an example, and any method capable of setting a partial area in the currently recorded contents in some form or other may be used.

In any case, through the process executed at Step S206, a partial area is set in the contents continuously recorded through loop recording, in linkage with a program which is a unit displayed in the EPG window. That is, each partial area corresponds to each program displayed in the EPG window, and the number of partial areas in the contents continuously recorded through loop recording is the number of programs included in the contents.

Next, at Step S207, the number of the partial areas in the contents continuously recorded through loop recording, that is, the number of programs included in the contents is evaluated, and according to the evaluation result, the flow branches off. By the previously described process, the upper limit number of programs has been stored in the recording apparatus 10. The upper limit number of programs and the number of the partial areas in the currently loop-recorded contents (that is, the number of programs in the contents) are compared.

If the number of the partial areas in the currently recorded contents exceeds the upper limit number of programs, the flow goes to Step S208. If not, the flow skips Step S208 and goes to Step S209.

At Step S208, an older partial area in the temporal order is deleted, so as to make the number of the partial areas in the currently recorded contents equal to or smaller than the upper limit number of programs. Concretely, an older portion of the management information in the temporal order is deleted in a unit of a partial area.

Conventionally, since loop recording is controlled so that the time length of the contents does not exceed the loop time, the recording area is saturated when the time length of the contents reaches the loop time. On the other hand, in the recording apparatus 10 of this embodiment, the recording area is saturated when the number of partial areas (the number of programs) in the contents reaches the upper limit number of programs, and therefore, the recording area is not necessarily saturatedwhen the time length of the contents reaches a predetermined value.

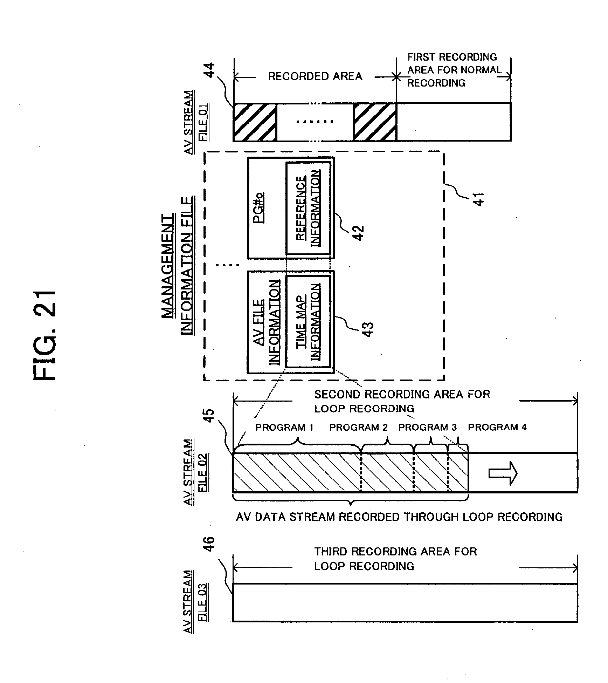

FIG. 21 shows a state where the loop recording to the second AV stream file 45 has progressed a little further from the state shown in FIG. 20. In the example in FIG. 21, in accordance with the further progress of the loop recording, pieces of boundary information of partial areas are set at the positions of ends of programs, and consequently, four partial areas exist in the contents continuously recorded through loop recording. That is, three programs already broadcast exist in the contents, and recording of the fourth program currently on air is underway.

Here, as described above at Step S205 and Step S206, in setting the boundary information of the partial areas, the program information used for the display of the EPG window is referred to, and each of the partial areas in the contents is made to correspond to a program which is a unit displayed in the EPG window.

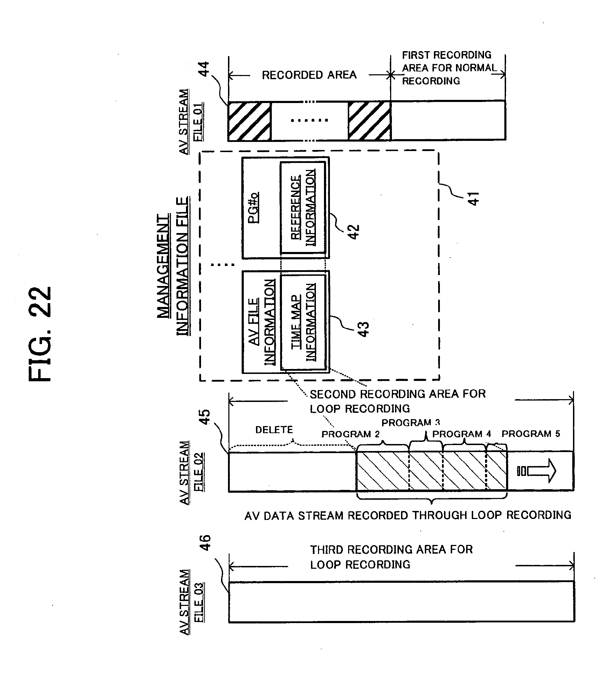

FIG. 22 shows a state where the loop recording to the second AV stream file 45 has further progressed. Here, the AV data stream recording to the AV stream file 02 has further progressed, and recording of the fifth program from the start of the loop recording is underway. As previously described, the upper limit number of programs is set to "4" in this example. Therefore, the management information on the partial area corresponding to the oldest program is deleted, so that the upper limit number of programs is not exceeded.

The end point as the time map information included in the management information indicates a logical address of the position to which the AV data stream recording has progressed, and the time corresponding to this recording progress position is described as the end point time stamp information in the reference information. Meanwhile, since the management information about the partial area corresponding to the first program has been deleted, the start point as the time map information included in the management information has been updated so as to indicate a logical address of a start position of the partial area corresponding to the second program which is the oldest among the programs left on the current loop recording. The time corresponding to the updated position is described as new start point time stamp information in the reference information.

In FIG. 22, the second program to the fifth program correspond to four programs. Only portions of AV data streams indicated by the management information are ef fectiveAV data streams. On the other hand, a portion which has been corresponding to the first program and whose management information has been deleted is an invalid AV data stream. This portion is overwritten by a new AV data stream when a seek of the second AV stream file 45 occurs as the loop recording progresses.

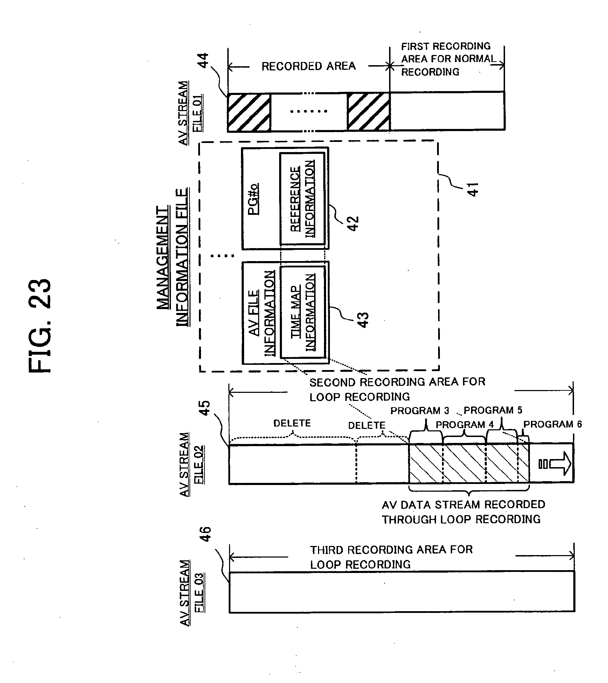

FIG. 23 shows a state where the loop recording to the AV stream file 02 has still further progressed. Here, recording of the sixth program from the start of the loop recording is underway. Here, as in FIG. 22 previously described, the management information about a partial area corresponding to the second program which is the oldest at this point in time is deleted, so that the number of programs left on the loop recording is prevented from exceeding the upper limit number 4 of programs.

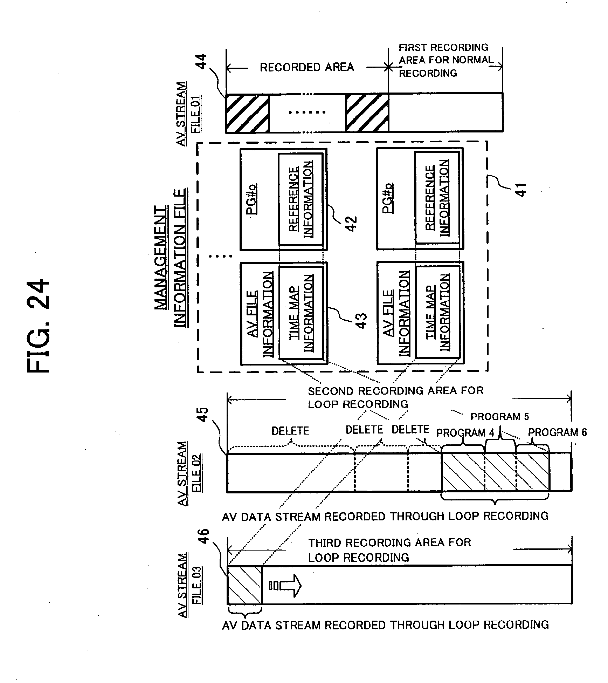

FIG. 24 shows a state when a save instruction of a program is given by a user. In this example, the fourth program from the start of the loop recording among the programs left on the loop recording is selected as a program to be saved.

When a save operation of the program is performed by a user, the loop recording to the AV stream file 02 is stopped, and the loop recording is continued to the AV stream file 03 which is selected as a new recording destination file.

In the example in FIG. 24, it is assumed that the user performs the save operation in the course of the recording of the sixth program from the start of the loop recording, and the recording destination file is changed from the AV stream file 02 to the AV stream file 03 after broadcasting of the sixth program ends.

Specifically, delay processing is performed in which the recording destination file of the AV data stream is changed at the time when the position of the end of the program is reached, and AV data streams of the fourth to sixth programs from the start of the loop recording, among the four programs left on the loop recording at the point in time in the example in FIG. 24, are recorded in the AV stream file 02, and the seventh program from the start of the loop recording is currently recorded to the AV stream file 03.

Further, in the example in FIG. 24, when the recording destination file of the AV data stream is changed, the management information about the contents is divided in accordance with this change. Here, the three programs recorded in the AV stream file 02 are recorded as a content PG#o, and the program currently recorded in the AV stream file 03 is recorded as a new content PG#p.

Therefore, it must be noted that at this point in time, there are two separate contents as the management information and two separate AV stream files in which the AV data streams are recorded, even though the loop recording of the contents is continued. For example, in a case where chasing playback is executed at the point in time in FIG. 24, while the seventh program from the start of the loop recording is being recorded, the content PG#p/AV stream file 03 have to be referred to for the chasing playback of the seventh program among the four programs left on the loop recording, but the content PG#o/AV stream file 02 have to be referred to for the chasing playback of the fourth to sixth programs from the start of the loop recording.

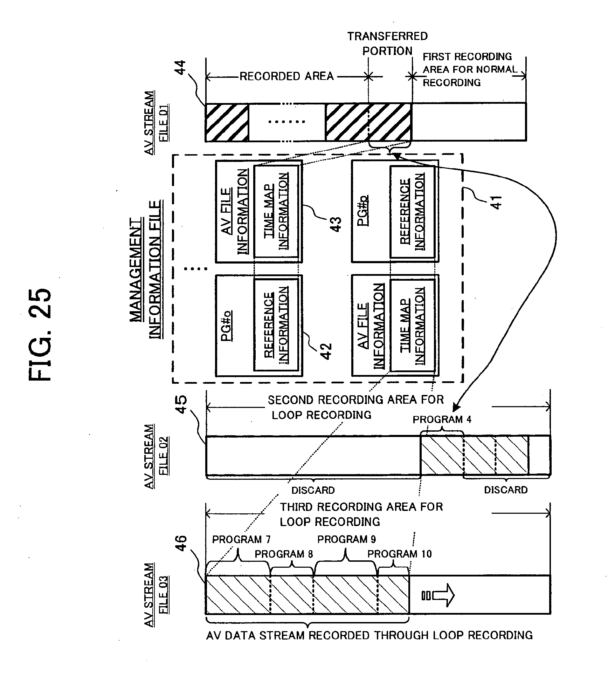

Next, FIG. 25 shows a state when the loop recording has further progressed after the recording destination file of the AV data stream is changed. At this point in time, the loop recording has further progressed, and recording of the tenth program from the start of the loop recording is underway.

At this point in time, the four programs left on the loop recording, that is, the seventh to tenth programs from the start of the loop recording all exist in the AV stream file 03. Therefore, since the AV streamfile 02 is not referred to even in chasing playback, the AV stream file 02 is considered as a file to be saved, and a portion of the recording area corresponding to the fourth program from the start of the loop recording, which has been already selected as a save target, is transferred from the AV stream file 02 to the AV stream file 01. That is, the delay processing is executed in which the transfer takes place after the AV stream file 02 is handled dedicatedly as the file to be saved.

At Step S209, it is determined whether or not the program selected from the programs left on the loop recording is to be saved, and according to the determination result, the flow branches off. If no saving is necessary, the flow returns to the aforesaid Step S204 and the loop recording is continued. On the other hand, if the selected program is to be saved, the flow goes to the next Step S210.

If the program is to be saved (Yes at Step S209), the loop recording unit 57 stops the loop recording (S210). Here, the AV data stream recording to the second AV stream file 45 is stopped, and at the same time, the update processing of the management information 41 such as the creation of the time map information is also stopped, and the loop-recorded portion is set as a file to be saved.

The loop recording unit 57 selects the third AV stream file 46 as a recording area for the loop recording, and creates the management information 41 in the initial state, which is a state at the start of the recording, to store the created management information 41 in an internal memory (S211). Consequently, the loop recording is thereafter executed to the third AV stream file 46, instead of the second AV stream file 45 to which the loop recording has been executed.

When the loop recording is stopped, the recording area transfer unit 58 transfers an area in which an AV data stream indicated by the management information about a partial area corresponding to the program selected as a save target is recorded, from the second AV stream file 45 to the first AV stream file 44 as an archive file (S212/S213) . For example, in a case where a file system complying with the UDF (Universal Disk Format) standard is used, the recording area transfer unit 58 transfers an extent corresponding to the area in which the AV data stream corresponding to the program selected as the save target is recorded, from a file entry of the second AV stream file 45 to a file entry of the first AV stream file 44. More specifically, descriptions of the file entries of the first AV stream file 44 and the second AV stream file 45 are changed so that the extent indicated by the file entry of the second AV stream file 45 is indicated by the file entry of the first AV stream file 44.

In parallel to Step S213, the loop recording unit 57 records video data and audio data sent from the PS encoder 12 or the stream processor 22, to a third recording area reserved in the third AV data stream file 46 in the HDD 14 (S204). Thereafter, the loop recording is continued.

The recording area forming unit 54 sets again a predetermined size of vacant area in the second AV stream file 45 to make the second AV stream file 45 usable for the next loop recording as a new recording destination file (S214).

Also at this Step S214, similarly at the aforesaid Step S202, in preparation for the next loop recording, the recording area of the AV stream file 02 is reserved so as to have a size large enough to record the model programs which are set with a relatively large allowance as, for example, having "HD (High Definition) video, the highest possible transfer rate in digital broadcast standards, and the four-hour time length", in the number equal to the set and stored upper limit number of programs. At this time, in reserving the recording area of the AV stream file 02, a margin may be further provided for safety.

If the loop recording processing is to be continued, the flow returns to Step S204 and the loop recording unit 57 continues the loop recording (No at S215/"A").

The loop recording to the second AV stream file 45 is stopped in response to a user' s program save operation, and the loop recording is continued to the thirdAV stream f ile 46 as a newly selectedrecording destination file. Concretely, the portion of the recording area corresponding to the program to be saved is transferred from the second AV stream file 45 to the first AV stream file 44.

Here, for example, in a case where a file system complying with the UDF (Universal Disk Format) standard is used, an extent corresponding to an area in which an AV data stream indicated by the management information about a partial area corresponding to the fourth program selected as a save target is recorded is transferred from a file entry of the AV stream file 02 to a file entry of the AV stream file 01. More specifically, descriptions of the file entries of the first AV stream file 44 and the second AV stream file 45 are changed so that the extent indicated by the file entry of the second AV stream file 45 is indicated by the file entry of the first AV stream file 44. At the same time, the time map information about the content PG#o is also changed so as to indicate a logical address in the first AV stream file 44 for normal recording which is a transfer destination.

Areas not to be transferred other than the partial area corresponding to the fourth program are set to an unused state and is re-used for the next loop recording. The fourth program from the start of the loop recording which has been a transfer target and the subsequent fifth and sixth programs which are to be discarded continue to exist in the AV stream file 02 up to the point in time in FIG. 25, but are excluded from the objects of chasing playback, for example, by providing a playback reject flag. The display of their program information is deleted from the EPG window, and thus are handled as programs not left on the loop recording.

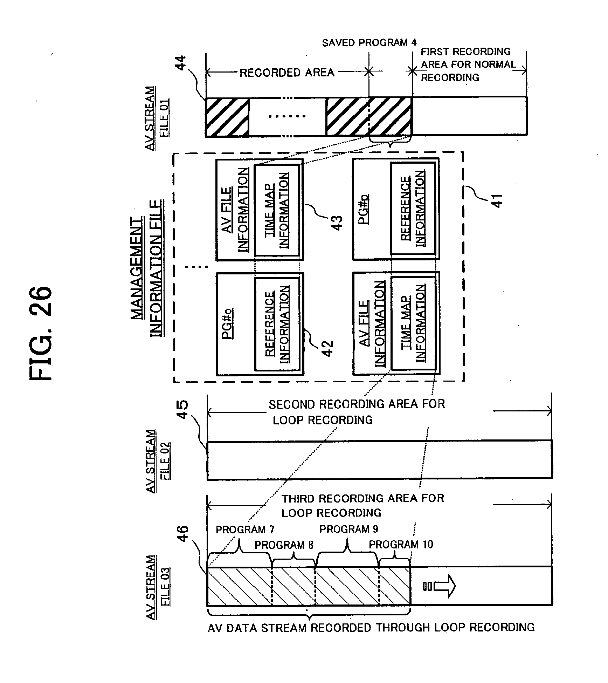

FIG. 26 shows a state after the completion of the transfer of the extent of the area in which the program to be saved is recorded. Here, in preparation for new loop recording, a predetermined size of vacant area is reserved in the second AV stream file 45 after the content save processing is finished. During this period, the loop recording to the third AV stream file 46 is continuously executed in parallel.

Here, there may be a case where an area in which the AV data stream corresponding to the program to be saved is recorded exists dividedly as the first half and the latter half in a tail portion and a head portion of the recording area in the second AV stream file 45 respectively. In this case, at the time of the transfer from the second AV stream file 45 to the first AV stream file 44, it is necessary to transfer these portions while maintaining consistency with the reproduction sequence. In addition, the AV data streams not corresponding to the program to be saved are discarded at Step S213. Consequently, the areas in which the AV data streams not to be transferred are recorded are set to an unused state and are usable for the next recording. At the time of this transfer processing, the time map information included in the management information is updated so as to indicate the logical address in the first AV stream file 44. Therefore, the management information stored in the memory is written to the management information file after the transfer processing is completed. However, since the loop recording to the third AV stream file 46 is still underway in parallel at this point in time, it is thought appropriate inpractical viewpoint that the writing to the management information file comes after the completion of the loop recording which has been executed to the third AV stream file 46 in parallel.

Further, in the above description, if the saving of the program selected from the programs left on the loop recording is selected at Step S212, loop recording is resumed to a new file to which the recording destination file is changed through the subsequent processes at Step S213 and Step S214, by executing the processes at and after Step S204 again, but to simplify the structure, the following simple procedure may be adopted: [1] the loop recording to the original recording destination file is stopped, [2] the recording destination file is changed, and [3] the loop recording is resumed to the new recording destination file. Further, some measure may be taken so as to reduce lack of video as much as possible when the recording destination file is changed, for example, by setting a buffer capacity of the AV stream data relatively large. Another possible measure may be to start the loop recording to the new recording destination file at a little earlier timing than the timing of the stop of the loop recording to the original recording destination file, and to thereafter continue the loop recording to the original recording destination file in parallel for a while. Lack of video due to the change of the recording destination file is prevented by providing a so-called margin area.

In a series of the operations shown in FIG. 19 to FIG. 26, a new content is provided on the management information file in accordance with the change of the recording destination file of the AV data stream. Specifically, as shown in FIG. 25 and FIG. 26, a content first recorded to the second AV stream file 45 through loop recording is defined as a content PG#o, and a content recorded to the third AV stream file 46 through loop recording after the change of the recording destination file is defined as a new PG#p. However, this operation is not restrictive, and another possible form is, for example, that the content PG#o includes not only the reference information and the time map information indicating the portion transferred to the first AV stream file 44, but also the reference information and the time map information indicating the AV data stream recorded to the thirdAV stream file 46 through loop recording, without providing a new content even after the change of the recording destination file to the third AV stream file 46.

In this case, only the program to be saved is defined as the new content PG#p at the time when the program to be saved is transferred from the AV stream file 02 to the AV stream file 01.

Further, in FIG. 24 described above, the recording destination file of the AV data stream is not changed immediately at the time when the user performs the save operation, but the delay processing is performed in which the recording destination file is changed after the end of broadcasting of the sixth program from the start of the loop recording, whose recording was underway at the time when the save operation was performed.

However, this is not restrictive, and the recording destination file of the AV data stream may be immediately changed. In this case, in executing chasing playback of the sixth program, it must be noted that this program is dividedly recorded in the two AV stream file 02 and AV stream file 03.

Further, in FIG. 25 described above, after the recording destination file of the AV data stream is changed to the AV stream file 03, the delay processing is performed in which the program to be saved is transferred after all the four programs left on the loop recording exist in the AV stream file 03 and the AV stream file 02 is handled dedicatedly as a save target file.

However, this is not restrictive, and for example, the program to be savedmay be transferred immediately after the recording destination file of the AV data stream is changed to the AV stream file 03, even though, in this case, a program existing in the AV stream file 02 and left on the loop recording, other than the program to be saved, is discarded.

In the first and second embodiments described above, since the time length, the transfer rate, and so on vary depending on individual broadcast programs, and therefore, a model program type is set with a relatively large allowance, for example, as having "HD (High definition) video, the highest possible transfer rate in the digital broadcast standards, and the four-hour time length", as described above.

However, there may be a case where a program departing from this model appears. A conceivable example of such a case is such that the resolution and the transfer rate of a program are the same as those of the aforesaid model but the time length of the program exceeds that of the aforesaid model. In this case, as an exceptional handling, the program, even though one program, is divided halfway (for example, at a position where the time length set in the aforesaid model is reached) into a plurality of partial areas and may be handled as a plurality of programs in a pseudo manner.

However, this handling is basically exceptional, and there may be provided a mechanism to display an alert when such a case occurs, thereby notifying a user that a situation may occur in which a portion up to the middle of the program is deleted or conversely a portion after the middle is left in accordance with the progress of the loop recording. In this case, it must be noted that program information displayed in the EPG window and a partial area in the contents are in many-to-one correspondence.

Further, in a case of a video recorder/reproducer having a mechanism capable of changing the type of the model program by a user's operation, it may have a mechanism displaying an alert to promote a user to set a model program type with an allowance when a program may highly possibly depart from the model program type, such as, for example, when a SD (Standard Definition) video not a HD (High Definition) video is premised, an assumed transfer rate is low, or the time length of the program is short.

On the other hand, a program, even if displayed as one program in the EPG (Electronic Program Guide) window, sometimes has a very short time length, such as, for example, sport news and weather forecast.

In the recording apparatus 10 of this embodiment, since the structure based not on the loop time but on the number of programs is adopted, such a very short program is handled as one program, which may sometimes cause a problem that a program having a certain time length and necessary for a user is not left on the loop recording and is deleted early.

To prevent this, there maybe provided a mechanism to include such a program with a short time length in a long program immediately before or after the program or combine a group of successive programs with a short time length into one, thereby preventing improper increase in the number of partial areas in the contents continuously recorded through loop recording, that is, the number of programs included in the contents.

Since program information displayed in the EPG window is available before a program is broadcast, it is possible to decide to some extent in advance whether to execute the processing of combining such programs with a short time length or not. In this case, the recording area is divided into partial areas in a unit of the combination of the programs with a short time length, and when one of the programs composing the combination is selected as a program to be saved, the combination of the programs with a short time length is transferred as a unit to the AV data stream file as an archive file. Similarly, when it is not left on the loop recording and deleted, the display of the combination of the short programs with a short time length is deleted as a unit from the EPG window.

As described above, according to the recording apparatuses of these embodiments, the management information managing unit 51 manages the management information for normal recording and the management information for loop recording through the common program group information 42 and AV file information 43, and therefore, it is possible to provide the management information to the user as program information without any distinction between normal recording and loop recording.

According to the recording apparatuses of these embodiments, a relatively large area is reserved as a loop recording area, and therefore, even if a save instruction of a currently loop-recorded program is given during loop recording, the program can be recorded in its entirety. Further, according to the recording apparatuses of these embodiments, since the loop time for loop recording is extendable according to the time length or the like of a program, a program whose time length is long can be recorded irrespective of user's setting.

### (Modified Example)

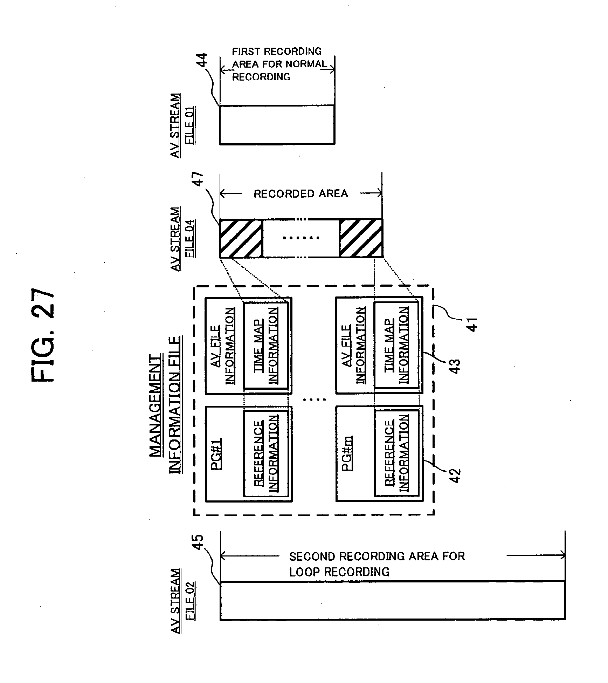

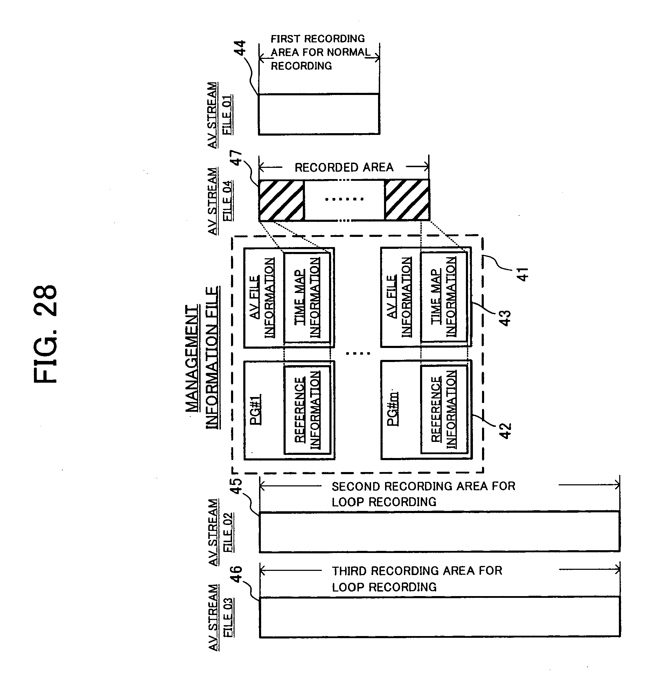

Next, modified examples of the first and second embodiments of the present invention will be described. FIG. 27 is a schematic chart showing recording areas according to the modified example of the first embodiment of the present invention, and FIG. 28 is a schematic chart showing recording areas according to the modified example of the second embodiment of the present invention.

In the modified example shown in FIG. 27, as recording areas, at least three AV stream files are provided, among which one and another (a first and a second AV stream file 44 and 45) are assigned to normal recording and loop recording respectively, and the other (fourth AV stream file 47) is assigned as a specialized archive file dedicated to the saving of contents.

In the modified example shown in FIG. 28, as recording areas, at least four AV stream files are provided, among which one AV stream file (first AV stream file 44) is assigned to normal recording, two AV stream files (second and third AV stream files 45 and 46) are assigned to loop recording, and the other (fourth AV stream file 47) is assigned as a specialized archive file dedicated to the saving of contents.

According to the modified examples shown in FIG. 27 and FIG. 28, the first AV stream file 44 is usable as a specialized recording area of an AV data stream recorded through normal recording, and therefore, if the recording apparatus is provided with a plurality of encoders and tuners, the execution of normal recording in parallel to the execution of loop recording is possible. At this time, needless to say, it can be easily inferred from the contents described in the present invention that contents recorded throughnormal recording can be saved in the fourth AV stream file 47 even before the end of the loop recording, or contents recorded through loop recording can be saved in the fourth AV stream file 47 even before the end of normal recording.

### (Other Embodiment)

It is to be understood that the present invention is not limited to the above-described specific embodiments, and in implementing the present invention, the elements may be modified without departing from the spirit of the invention. The present invention can be embodied in various forms by appropriate combinations of the plural elements disclosed in the embodiments described above. For example, some of all the elements shown in the embodiments may be deleted. Further, elements in different embodiments may be combined appropriately. That is, two AV stream files or more for normal recording may be provided, three AV stream files or more for loop recording may be provided, two AV stream files or more for archive may be provided, or these forms may be combined.

Although the above embodiments have been described chiefly based on the hardware configuration, the embodiments may be implemented by software such as a computer program. The software may be stored in a computer-readable storage medium such as a flexible disk, or the software (program) may be independently transmitted. In this case, operations of the processing in the respective embodiments can be realized by the computer reading the software (program) stored in the storage medium, or by downloading the software from a LAN or the Internet (server) and installing the downloaded software.

That is, the software (program) of the present invention is not limited to that stored in a storage medium independent of a computer, and includes those distributed via a transmission medium such as a LAN or the Internet.

The storage medium is not limited to a flexible disk, but maybe any storage medium, irrespective of its storage form, providing that it is capable of storing a program and recording data and is readable by a computer or the like, such as, for example, a magnetic disk, an optical disk (CD-ROM, CD-R, DVD, or the like), a magneto-optical disk (MO or the like), or a semiconductor memory.

In accordance with an instruction from a program installed into a computer from the storage medium, an OS (Operating System) running on the computer, MW (middleware) such as database management software and network software, or the like may perform portions of respective operations of the processing for implementing the present embodiments.

The storage medium is not limited to a medium independent of a computer, and includes a storage medium to which a program transmitted via a LAN, the Internet, or the like is downloaded and stored or temporarily stored. The number of the storage mediums is not limited to one. In a case where the processing in the embodiments is executed from a plurality of mediums, these mediums are also included in the storage medium of the present invention. The medium may assume any configuration.

Based on a program stored in the storage medium, the computer executes operations of the processing in the present embodiments, and the computer may assume any configuration, such as one apparatus formed by a personal computer or the like, or a system in which a plurality of apparatuses are network-connected.

The computer is not limited to a personal computer and includes an arithmetic processing unit, a microcomputer, and the like included in an information processing apparatus. That is, the computer is a generic name representing equipment or apparatuses which can realize the functions of the present invention through a program.

## Claims

1. A recording apparatus, comprising:
a first area generating unit generating, in a storage medium, a first recording area to which first stream data is recorded;
a second area generating unit generating, in the storagemedium, a second recording area to which second stream data different from the first stream data is repeatedly overwrite-recorded;
a management information recording unit recording, to the storage medium, management information managing the first and second recording areas;
a data recording unit recording the second stream data to the second recording area;
a management information managing unit updating the management information when the second stream data is recorded, to set a partial area which is a segment of the second recording area and to prevent the number of the partial areas from exceeding a predetermined value; and
an area transfer unit transferring, to the first recording area, the second stream data recorded in the second recording area.

2. The recording apparatus according to claim 1, wherein the area transfer unit transfers the second stream data recorded in the second recording area to the first recording area while maintaining consistency with reproduction sequence.

3. The recording apparatus according to claim 1, further comprising a third area generating unit generating, in the storage medium, a third recording area which is different from the second recording area and to which the second stream data is repeatedly overwrite-recorded,
wherein the recording unit stops the overwrite-recording to the second recording area, and records the second stream data to the third recording area instead of the second recording area; and
wherein the area transfer unit transfers, to the first recording area, the second stream data recorded in the second recording area, in parallel to the recording to the third recording area.

4. The recording apparatus according to claim 1, wherein the management information managing unit sets the partial areas in correspondence to programs in an electronic program guide.

5. The recording apparatus according to claim 1, wherein the management information managing unit deletes part of the partial areas to prevent the number of the partial areas from exceeding the predetermined value.

6. The recording apparatus according to claim 5, further comprising a display unit displaying information on a program corresponding to the partial area except the deleted partial area.

7. The recording apparatus according to claim 1, wherein in the first recording area, only the second stream data transferred from the second recording area by the area transfer unit is recorded as the first stream data.

8. A recording/reproducing system, comprising:
a first area generating unit generating, in a storage medium, a first recording area to which first stream data is recorded;
a second area generating unit generating, in the storagemedium, a second recording area to which second stream data different from the first stream data is repeatedly overwrite-recorded;
a management information recording unit recording, to the storage medium, management information managing the first and second recording areas;
a data recording unit recording the second stream data to the second recording area;
a management information managing unit updating the management information when the second stream data is recorded, to set a partial area which is a segment of the second recording area and to prevent the number of the partial areas from exceeding a predetermined value;
an area transfer unit transferring, to the first recording area, the second stream data recorded in the second recording area; and
a display unit displaying at least one of the second stream data recorded in the second recording area and the second stream data transferred to the first recording area.

9. The recording/reproducing system according to claim 8, wherein the area transfer unit transfers the second stream data recorded in the second recording area to the first recording area while maintaining consistency with reproduction sequence.

10. The recording/reproducing system according to claim 8, further comprising a third area generating unit generating, in the storage medium, a third recording area which is different from the second recording area and to which the second stream data is repeatedly overwrite-recorded,
wherein the recording unit stops the overwrite-recording to the second recording area, and records the second stream data to the third recording area instead of the second recording area; and
wherein the area transfer unit transfers, to the first recording area, the second stream data recorded in the second recording area, in parallel to the recording to the third recording area.

11. The recording/reproducing system according to claim 8, wherein the management information managing unit sets the partial areas in correspondence to programs in an electronic program guide.

12. The recording/reproducing system according to claim 8, wherein the management information managing unit deletes part of the partial areas to prevent the number of the partial areas from exceeding the predetermined value.

13. The recording/reproducing system according to claim 12, further comprising a display unit displaying information on a program corresponding to the partial area except the deleted partial area.

14. The recording/reproducing system according to claim 8, wherein in the first recording area, only the second stream data transferred from the second recording area by the area transfer unit is recorded as the first stream data.

15. A recording method, comprising:
generating, in a storage medium, a first recording area to which first stream data is recorded;
generating, in the storage medium, a second recording area to which second stream data different from the first stream data is repeatedly overwrite-recorded;
recording, to the storage medium, management information managing the first and second recording areas;
recording the second stream data to the second recording area; and
updating the management information when the second stream data is recorded, to set a partial area which is a segment of the second recording area and to prevent the number of the partial areas from exceeding a predetermined value.

16. The recording method according to claim 15, further comprising transferring, to the first recording area, the second stream data recorded in the second recording area while maintaining consistency with reproduction sequence.

17. The recording method according to claim 15, further comprsing:
generating, in the storage medium, a third recording area which is different from the second recording area and to which the second stream data is repeatedly overwrite-recorded;
stopping the overwrite-recording to the second recording area, and recording the second stream data to the third recording area instead of the second recording area; and
transferring, to the first recording area, the second stream data recorded in the second recording area, in parallel to the recording to the third recording area.

18. The recording method according to claim 15, further comprising setting the partial areas in correspondence to programs in an electronic program guide.

19. The recording method according to claim 15, further comprising deleting part of the partial areas to prevent the number of the partial areas from exceeding the predetermined value.

20. The recording method according to claim 19, further comprising displaying information on a program corresponding to the partial area except the deleted partial area.
